(19) Europäisches Patentamt
European Patent Office
Office européen des brevets

(11) EP 1 097 970 A2

(12) **EUROPÄISCHE PATENTANMELDUNG**

(43) Veröffentlichungstag:
**09.05.2001 Patentblatt 2001/19**

(21) Anmeldenummer: **00123856.7**

(22) Anmeldetag: **02.11.2000**

(51) Int Cl.⁷: **C09B 62/008**, C09B 62/245, C09B 62/085, C09B 62/51, C09B 62/44

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **08.11.1999 DE 19953647**

(71) Anmelder: **DyStar Textilfarben GmbH & Co. Deutschland KG**
**60318 Frankfurt am Main (DE)**

(72) Erfinder: **Dannheim, Jörg, Dr.**
**60489 Frankfurt am Main (DE)**

(54) **Wasserlösliche Monoazoverbindungen, Verfahren zu ihrer Herstellung und ihre Verwendung als Farbstoffe**

(57) Die vorliegende Erfindung betrifft Monoazoverbindungen der allgemeinen Formel (I)

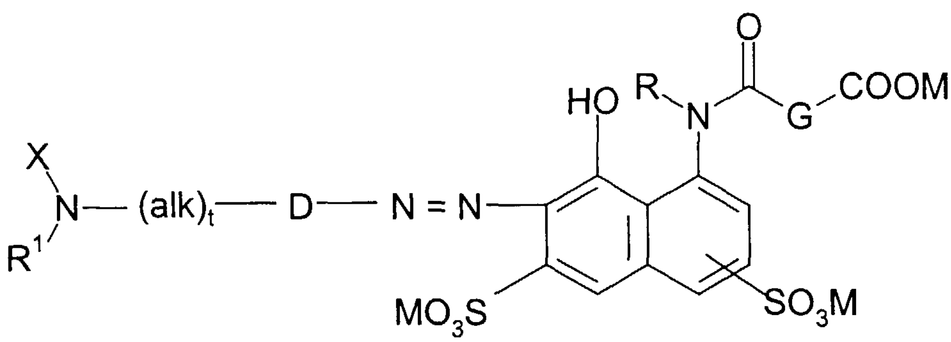

( 1 )

worin M, X, $R^1$, alk, t, D, R und G wie in Anspruch 1 angegeben definiert sind, Verfahren zu ihrer Herstellung, sowie Verfahren zum F≅rben von hydroxy- und/oder carbonamidgruppenhaltigem Material.

EP 1 097 970 A2

## Beschreibung

Wasserlösliche Monoazoverbindungen, Verfahren zu ihrer Herstellung und ihre Verwendung als Farbstoffe

Aus den japanischen Patentdokumenten 57-143572 und 57-143574 sind faserreaktive Azoverbindungen bekannt, die eine β-Carboxy-ethyl-carbonylamino-oder Carboxy-acrylamino-Gruppe in der Sulfo-naphthol-Kupplungskomponente enthalten. Sie liefern als Farbstoffe beispielsweise auf Baumwolle rote Färbungen, die aber in einigen Eigenschaften nicht befriedigen und teilweise insbesondere unbefriedigende Lichtechtheiten besitzen.

Mit der vorliegenden Erfindung wurden nunmehr Monoazoverbindungen der nachstehenden allgemeinen Formel (1) gefunden, die gegenüber den bekannten Farbstoffen verbesserte Eigenschaften besitzen, wobei insbesondere die gute Lichtechtheit und die gute Auswaschbarkeit nicht fixierter Anteile aus dem gefärbten Material hervorzuheben sind und die sich insbesondere auch durch die gute Löslichkeit und Klotzflottenbeständigkeit, sowie ihre Farbtonstabilität bei unterschiedlichen Färbebedingungen hervorheben.

Die vorliegende Erfindung betrifft Monoazoverbindungen der allgemeinen Formel (I)

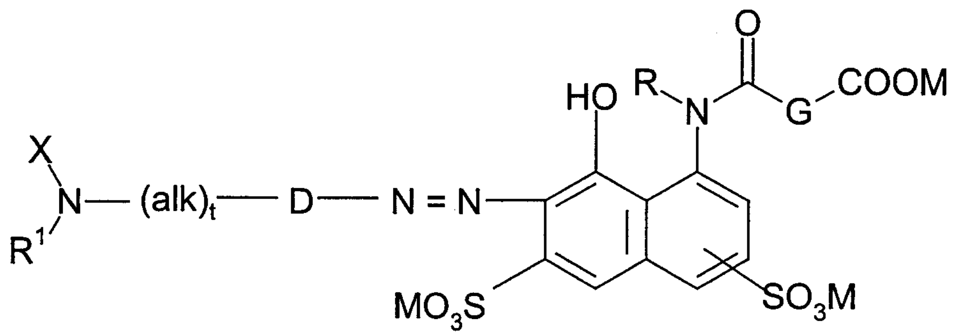

(1)

worin

- M für Wasserstoff, ein Alkalimetall oder ein anderes farbloses salzbildendes Metall steht;
- X eine faserreaktive Gruppe oder eine Gruppierung, die eine faserreaktive Gruppe enthält, bedeutet;
- $R^1$ für Wasserstoff, Alkyl mit 1 bis 4 C-Atomen oder Phenyl, das durch Sulfo, Methyl, Ethyl, Methoxy, Ethoxy oder Chlor substituiert sein kann, steht;
- alk Alkylen mit 1 bis 4 C-Atomen bedeutet;
- t die Zahl Null oder 1 ist;
- D für Phenylen, das durch 1 oder 2 Substituenten aus der Gruppe Sulfo, Carboxy, Alkyl mit 1 bis 4 C-Atomen, Alkoxy mit 1 bis 4 C-Atomen und Chlor substituiert sein kann, oder für Naphthylen, das durch 1 oder 2 Sulfogruppen substituiert sein kann, steht;
- R Wasserstoff oder Alkyl mit 1 bis 4 C-Atomen bedeutet;
- G für Alkylen mit 2 bis 8 C-Atomen steht, das durch eine Heterogruppe unterbrochen sein kann und das durch einen oder mehrere Substituenten aus der Gruppe Halogen, Alkyl mit 1 bis 4 C-Atomen oder Phenyl substituiert sein kann, wobei die Alkylgruppen und die Phenylgruppe ihrerseits durch Hydoxy oder Alkoxy von 1 bis 4 C-Atomen substituiert sein können.

Sowohl in der allgemeinen Formel (1) als auch in den nachfolgend angegebenen allgemeinen Formeln können die einzelnen Formelglieder, sowohl verschiedener als auch gleicher Bezeichnung innerhalb einer allgemeinen Formel, im Rahmen ihrer Bedeutung zueinander gleiche oder voneinander verschiedene Bedeutungen haben.

Für M stehendes Alkalimetall ist insbesondere Natrium, Kalium oder Lithium. Unter einem anderen farblosen salzbildenden Metall wird beispielsweise das Äquivalent eines Erdalkalimetalls verstanden, wobei Calcium bevorzugt ist. Für R, $R^1$, nachstehend definierte Reste R oder als Substituenten von G stehende Alkylgruppen mit 1 bis 4 Kohlenstoffatomen können geradkettig oder verzweigt sein und bedeuten beispielsweise Methyl, Ethyl, n-Propyl, i-Propyl, n-Butly, i-Butyl, sek.-Butyl oder tert.-Butyl. Bevorzugt sind Methyl und Ethyl. Analoges gilt für Alkoxygruppen, die Alkylengruppen alk, die somit bevorzugt Methylen oder Ethylen bedeuten oder auch für G stehende Alkylengruppen.
R bedeutet bevorzugt Wasserstoff, $R^1$ bevorzugt Wasserstoff, Methyl oder Ethyl. Halogen bedeutet insbesondere Fluor, Chlor oder Brom, wobei Chlor und Brom bevorzugt sind.
Der Begriff Sulfo oder Sulfogruppe schließt sowohl deren S≅ureform als auch deren Salzform ein, steht also für Gruppen der allgemeinen Formel $-SO_3M$, in welcher M die obengenannte Bedeutung besitzt. Analoges gilt für die Carboxygruppen, die der allgemeinen Formel -COOM entsprechen.

Heterogruppen, durch die ein für G stehender Alkylenrest mit 2 bis 8 Kohlenstoffatomen unterbrochen sein kann, sind insbesondere die Gruppen -0-und -NH-.

G steht insbesondere für Ethylen oder Propylen, die durch Methyl, Ethyl, Phenyl oder Chlor substituiert sein können. Besonders bevorzugt steht G für 1,2-Ethylen, 1,2-Propylen, 1,3-Propylen, 1,3-Butylen, 1,3-Pentylen, 2,3-Butylen, 2-Phenyl-1,3-propylen oder 2-Methyl-1,3-propylen.

Für X stehende faserreaktive Gruppen oder Gruppierungen, die eine faserreaktive Gruppe enthalten, sind beispielsweise halogensubstituierte s-Triazin- oder Pyrimidingruppen, wobei die Halogensubstituenten Fluor, Chlor oder Brom und bevorzugt Fluor oder Chlor sind und der halogensubstituierte s-Triazinrest noch eine gegebenenfalls substituierte Aminogruppe enthalten kann und die Substituenten dieser Aminogruppe Phenyl, Naphthyl oder Alkyl von 1 bis 4 Kohlenstoffatomen sind, die wiederum eine faserreaktive Gruppe der Vinylsulfonreihe enthalten, sein können, oder beispielsweise ein 2,3-Dichlor-phenazin-(1,4)-6-carbonyl-Rest sind.

Faserreaktive Reste sind beispielsweise solche, die den allgemeinen Formeln (3a), (3b), (3c), (3d), (3e), (3f), (3g) oder (3h)

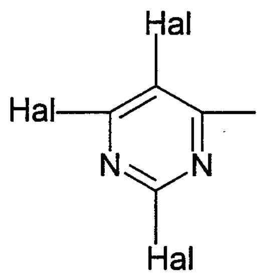

( 3a )

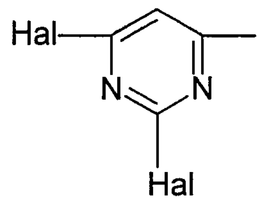

( 3b )

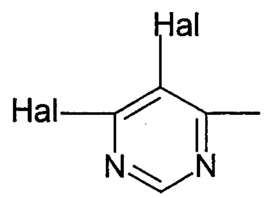

( 3c )

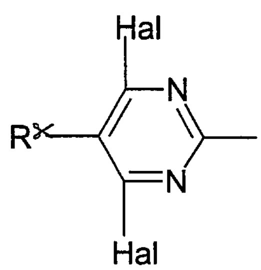

( 3d )

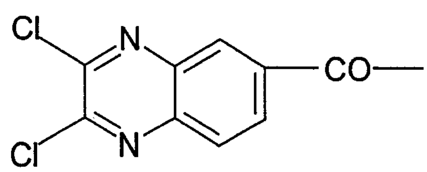

( 3e )

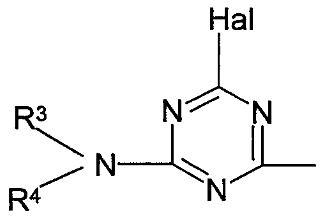

( 3f )

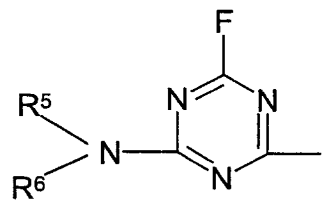

( 3g )

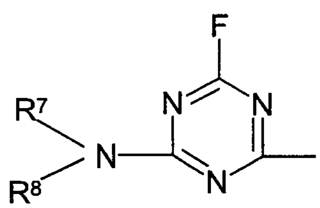

( 3h )

entsprechen, in welchen

Hal jedes unabhängig voneinander Chlor, Brom oder Fluor, bevorzugt Chlor oder Fluor bedeutet;
$R^{\alpha}$ Wasserstoff oder Hal bedeutet;
$R^3$ Wasserstoff oder Alkyl mit 1 bis 4 Kohlenstoffatomen, das durch Hydroxy, Alkanoyloxy mit 2 bis 5 Kohlenstoffatomen, wie Acetyloxy, Sulfato, Phosphato, Carboxy, Sulfo oder Alkoxy mit 1 bis 4 Kohlenstoffatomen substituiert sein kann, bedeutet;
$R^4$ Wasserstoff oder Alkyl mit 1 bis 4 Kohlenstoffatomen, das durch Hydroxy, Alkanoyloxy mit 2 bis 5 Kohlenstoffatomen, wie Acetyloxy, Sulfato, Phosphato, Carboxy, Sulfo oder Alkoxy mit 1 bis 4 Kohlenstoffatomen substituiert sein kann, bedeutet oder ein gegebenenfalls durch 1 oder 2 Methyl substituiertes Cyclohexyl mit 5 bis 8 Kohlenstoffatomen ist oder Phenyl, das durch 1 oder 2 Substituenten aus der Gruppe Sulfo, Carboxy, Chlor, Alkyl mit 1 bis 4 Kohlenstoffatomen, wie Ethyl und insbesondere Methyl, und Alkoxy mit 1 bis 4 Kohlenstoffatomen, wie Ethoxy und insbesondere Methoxy, substituiert sein kann, ist oder Naphthyl ist, das durch Sulfo substituiert sein kann, oder
$R^3$ und $R^4$ zusammen ein Alkylen mit 5 bis 8 Kohlenstoffatomen oder ein durch -O- oder -NH- unterbrochenes Alkylen mit 4 bis 6 Kohlenstoff-atomen und zusammen mit dem N-Atom den Rest eines gesättigten Heterocyclus, wie beispielsweise Piperidino, Morpholino oder Piperazino, bilden;
$R^5$ Wasserstoff oder Alkyl von 1 bis 4 Kohlenstoffatomen, wie Methyl oder Ethyl, oder Phenyl, das durch Chlor, Sulfo, Carboxy, Methyl, Ethyl, Methoxy oder Ethoxy substituiert sein kann, bedeutet;
$R^6$ für eine Gruppe der allgemeinen Formel (4a) oder (4b) steht

$$Y - SO_2 - ALK - \qquad (4a)$$

$$Y - SO_2 - AR - \qquad (4b)$$

in welchen

Y Vinyl oder Ethyl bedeutet, das durch einen alkalisch eliminierbaren Substituenten substituiert ist, wie beispielsweise durch Chlor, Brom, Sulfato, Thiosulfato, Phosphato, Alkanoyloxy mit 2 bis 5 Kohlenstoffatomen, wie Acetyloxy, Benzoyloxy, Sulfobenzoyloxy oder p-Toluylsulfonyloxy, bevorzugt Vinyl, β-Chlorethyl oder β-Sulfatoethyl;

ALK Alkylen mit 1 bis 4 Kohlenstoffatomen, wie Methylen und insbesondere Ethylen oder n-Propylen, bedeutet und

AR Phenylen bedeutet, das durch 1 oder 2 Substituenten aus der Reihe Sulfo, Carboxy, Alkoxy mit 1 bis 4 Kohlenszoffatomen, wie Ethoxy und insbesondere Methoxy, Alkyl mit 1 bis 4 Kohlenstoffatomen, wie Ethyl und insbesondere Methyl, und Chlor substituiert sein kann, oder Naphthylen bedeutet, das durch 1 oder 2 Sulfogruppen substituiert sein kann;

$R^7$ Wasserstoff oder Alkyl mit 1 bis 4 Kohlentoffatomen, wie Methyl,bedeutet und bevorzugt für Wasserstoff steht;

$R^8$ eine Gruppe der allgemeinen Formel (4c) oder (4d) ist

$$Y - SO_2 - Alk - E - Alk - \qquad (4c)$$

$$Y - SO_2 - (Alk)_P - E - (Alk)_q - \qquad (4d)$$

in welchen

Y eine der obengenannten Bedeutungen hat,

Alk Alkylen mit 2 bis 4 Kohlenstoffatomem, bevorzugt Ethylen ist,

E eine Gruppe -0- oder -NH- ist,

p die Zahl Null oder 1 ist und

q die Zahl Null oder 1 ist, wobei die Summe (p + q) die Zahl 1 ist.

Heterocyclische faserreaktive Reste entsprechend den allgemeinen Formeln (3a) bis (3h) sind beispielsweise 2,4-Difluor-5-chlor-pyrimidin-6-yl, 2,4-Difluorpyrimidin-6-yl, 4,6-Difluor-5-chlor-pyrimidin-2-yl, 4,6-Difluor-pyrimidin-4-yl, sowie Reste der allgemeinen Formel (3f), (3g) und (3h), in welchen $R^3$ Wasserstoff, Methyl, Ethyl, β-Hydroxyethyl oder β-Sulfoethyl bedeutet, $R^4$ Wasserstoff, Methyl, Ethyl, β-Hydroxyethyl, Cyclohexyl, Phenyl, 2-Sulfophenyl, 3-Sulfophenyl, 4-Sulfophenyl, 2-Carboxyphenyl, Naphth-1-yl, 1-Sulfo-naphth-2-yl oder 1,5-Disulfo-naphth-2-yl ist oder die Gruppe $R^3R^4N$- Morpholino bedeutet, $R^5$ Wasserstoff ist, $R^6$ 4-(β-Sulfatoethylsulfonyl)-phenyl, 3-(β-Sulfatoethyl-sulfonyl)-phenyl, 2-Methoxy-5-(β-sulfatoethylsulfonyl)-phenyl, 4-Vinylsulfonyl-phenyl, 3-Vinylsulfonyl-phenyl, 2-Methoxy-5-(β-sulfatoethyl-sulfonyl)-phenyl, 2,5-Dimethoxy-4-(β-sulfatoethylsulfonyl)-phenyl, 2-Methyl-4-(β-sulfatoethylsulfonyl)-phenyl, 2-Methoxy-5-methyl-4-(β-sulfatoethylsulfonyl)-phenyl, β-(β'-Sulfatoethylsulfonyl)-ethyl oder γ-(β'-Sulfatoethylsulfonyl)-propyl ist, $R^7$ Wasserstoff ist und $R^8$ β-[β'-(β''-Chlor-ethylsulfonyl)-ethoxy]-ethyl ist.

In der allgemeinen Formel (1) steht die Gruppe X-$NR^1$-$(alk)_t$-D insbesondere für eine Gruppe der Formel (5a) oder (5b)

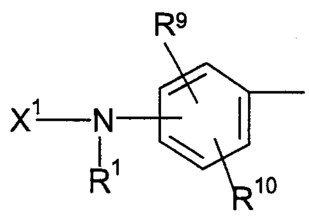

(5a)

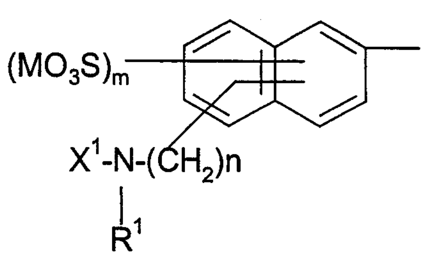

(5b)

in welchen

M und $R^1$ wie oben angegeben definiert sind;

$R^9$ Wasserstoff, Sulfo, Alkyl mit 1 bis 4 Kohlenstoffatomen, wie Ethyl und insbesondere Methyl, Alkoxy mit 1 bis 4 Kohlenstoffatomen, wie Ethoxy und insbesondere Methoxy, oder Halogen, wie Chlor, bedeutet;

$R^{10}$ Wasserstoff, Sulfo, Alkyl mit 1 bis 4 Kohlenstoffatomen, wie Ethyl und insbesondere Methyl, oder Alkoxy mit 1 bis 4 Kohlenstoffatomen, wie Ethoxy und insbesondere Methoxy, bedeutet;

$X^1$ für eine Gruppe der allgemeinen Formel (3a), (3b), (3c), (3d), (3e), (3f), (3g) oder (3h) steht, wobei die

Gruppe der allgemeinen Formel (3h) besonders und die Gruppe der allgemeinen Formel (3g) ganz besonders bevorzugt ist;

n die Zahl 1, 2 oder 3 ist; und

m die Zahl 1 oder 2 ist.

Reste der allgemeinen Formel (6)

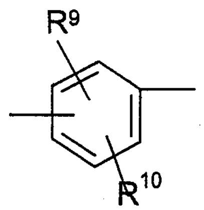

(6)

die in der allgemeinen Formel (5a) enthalten sind, sind beispielsweise 1,4-Phenylen, 1,3-Phenylen, 2-Sulfo-1,4-phenylen, 4-Sulfo-1,3-phenylen, 4,6-Disulfo-1,3-phenylen, 2,5-Disulfo-1,4-phenylen, 2-Methyl-1,4-phenylen, 4-Methyl-1,3-phenylen, 4-Sulfo-6-methyl-1,3-phenylen und 4-Sulfo-6-methoxy-1,3-phenylen.

Reste der allgemeinen Formel (7)

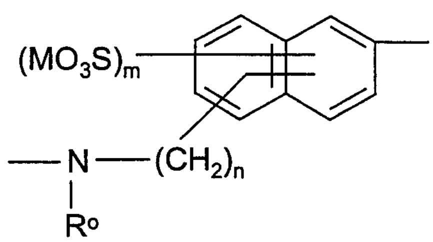

(7)

die in Formel (5b) enthalten sind, sind beispielsweise 5-Aminomethyl-1-sulfo-naphth-2-yl.

Von den erfindungsgemäßen Monoazoverbindungen der allgemeinen Formel (1) sind insbesondere solche bevorzugt, die der allgemeinen Formel (1A)

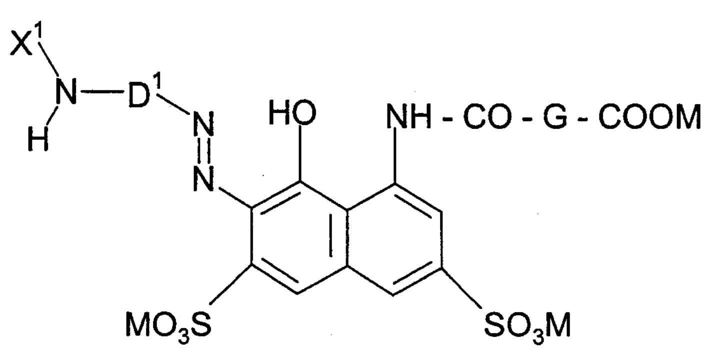

(1A)

entsprechen, in welchen M und G wie oben angegeben definiert sind und $X^1$-NH-$D^1$- für einen Rest der allgemeinen Formel (5a) oder (5b) steht, in welchen $R^9$ bevorzugt Wasserstoff ist, $R^{10}$ bevorzugt Wasserstoff oder Sulfo ist, $X^1$ bevorzugt für einen Rest der allgemeinen Formel (3a), (3b) oder (3h), besonders bevorzugt (3g), der oben angegebenen, insbesondere bevorzugten, Bedeutung steht.

Die erfindungsgemäßen Monoazoverbindungen der allgemeinen Formel (1) lassen sich auf verschiedene Art und Weise herstellen, so beispielsweise durch Umsetzung einer Aminonaphtholsulfonsäure der allgemeinen Formel (9)

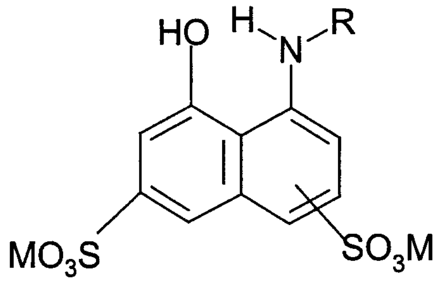

(9)

in welcher M und R wie oben angegeben definiert sind, mit einem Anhydrid der allgemeinen Formel (10)

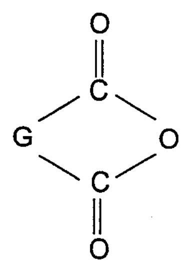

(10)

in welcher G wie oben angegeben definiert ist, in wäßriger Suspension oder in einem organischen, für diese Umsetzung inerten Lösemittel oder in einem Gemisch solch eines Lösemittels mit Wasser und anschließende Kupplungsreaktion der so erhaltenen Verbindung der allgemeinen Formel (11)

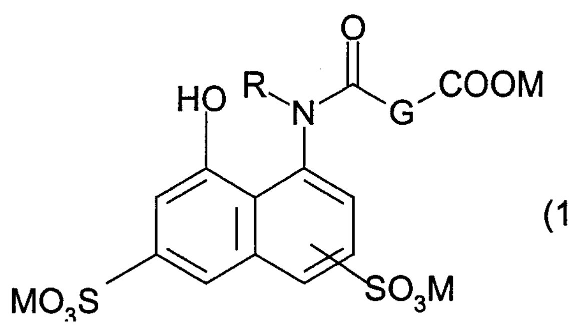

(11)

in welcher M, R und G wie oben angegeben definiert sind, mit einer auf üblichem Wege hergestellten Diazoniumsalzverbindung einer Aminoverbindung der allgemeinen Formel (12)

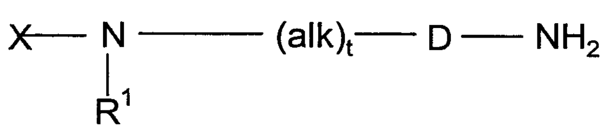

(12)

in welcher X, $R^1$, alk, D und t wie oben angegeben definiert sind.

Alternativ kann man auch so vorgehen, daß man zunächst das Diazoniumsalz einer Verbindung der allgemeinen Formel (13)

$$H - N(R^1) - D - NH_2 \qquad (13)$$

in welcher D und R° wie oben angegeben definiert sind, mit einer Verbindung der allgemeinen Formel (11) kuppelt und

anschließend die erhaltene Azoverbindung der allgemeinen Formel (14)

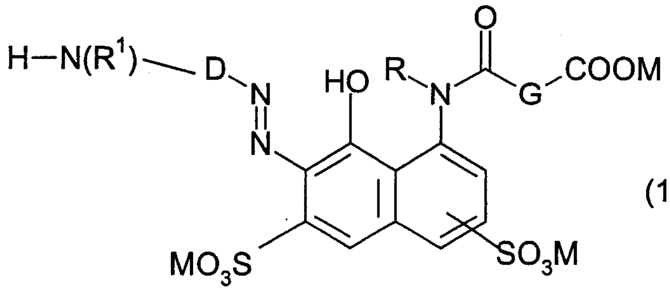

(14)

in welcher $R^1$, D, M, R und G wie oben abgegeben definiert sind, mit einer Verbindung der allgemeinen Formel Hal-X, in welcher Hal wie oben angegeben definiert ist und X für einen Rest der allgemeinen Formel (3a) bis (3h) steht, umsetzt, oder daß man im Falle der Synthese einer Monoazoverbindung der allgemeinen Formel (1), in welcher X für einen Rest der allgemeinen Formel (3f) bis (3h) steht, eine Verbindung der allgemeinen Formel (14) mit 2,4,6-Trihalogeno-1,3,5-triazin, wie 2,4,6-Trifluor-1,3,5-triazin (Cyanurfluorid) oder 2,4,6-Trichlor-1,3,5-triazin (Cyanurchlorid), umsetzt und die so erhaltene Dihalogeno-triazinylamino-Azoverbindung mit einem Amin der allgemeinen Formel $R^3R^4NH$ bzw. $R^5R^6NH$ bzw. $R^7R^8NH$ wobei $R^3$, $R^4$, $R^5$, $R^6$, $R^7$ und $R^8$ wie oben angegeben definiert sind, umsetzt.

Auch diese Umsetzungen mit den Halogeno-pyrimidin- und -triazin-Verbindungen mit den Aminoverbindungen bzw. Amino-azoverbindungen erfolgen in wäßriger Lösung oder Suspension, gegebenenfalls unter Zusatz eines inerten organischen Lösemittels. Solche inerte organische Lösemittel, die auch bei der Umsetzung eines Aminonaphthols der allgemeinen Formel (9) mit einem Anhydrid der allgemeinen Formel (10) eingesetzt werden können, sind beispielsweise Dimethylsulfoxid, Dimethylformamid und N-Methyl-pyrrolidon.

Bei der Umsetzung der Aminonaphtholsulfonsäure der allgemeinen Formel (9) mit den Anhydriden der allgemeinen Formel (10) geht man zweckmäßigerweise so vor, daß man zu einer wäßrigen Lösung der Aminonaphtholsulfonsäure das feinkörnige oder pulverförmige Anhydrid gibt und hierbei einen pH-Wert zwischen 2 und 8, bevorzugt zwischen 4 und 7, hält und die Umsetzung bei einer Temperatur zwischen 0 und 30°C, bevorzugt 0 und 25°C, durchführt. Der pH-Wert läßt sich üblicherweise mittels einer alkalisch wirkenden Verbindung, wie Natriumcarbonat und Natriumhydrogencarbonat oder wäßrige Natronlauge, ebenfalls mit Hilfe der entsprechenden Lithiumverbindungen, einstellen und halten.

Die Kupplungsreaktion einer Verbindung der allgemeinen Formel (11) mit den Diazoniumverbindungen der Aminen der allgemeinen Formel (12) oder (13) erfolgt in üblicher Weise in wäßriger Lösung, so beispielsweise bei einer Temperatur zwischen 0 und 25°C, bevorzugt zwischen 5 und 20°C, und bei einem pH-Wert zwischen 3 und 8, bevorzugt zwischen 4 und 6,5. Die Diazotierung der Aminoverbindungen geschieht ebenfalls in allgemein üblicher Weise in wäßriger Lösung, so beispielsweise mittels Natriumnitrit in stark saurem, beispielsweise salzsaurem oder schwefelsaurem, Medium bei einer Temperatur zwischen -5°C und +20°C und bei einem pH-Wert von kleiner als 3, bevorzugt kleiner als 2,5.

Die Ausgangsverbindungen, die zur Synthese der Monoazoverbindungen der allgemeinen Formel (1) dienen, sind allgemein bekannt oder lassen sich analog bekannten Verfahrensweisen herstellen, so beispielsweise die Aminoverbindungen der allgemeinen Formel (12) durch Umsetzung einer Aminoverbindung der allgemeinen Formel (13) mit einer Verbindung der allgemeinen Formel Hal-X in wäßriger Lösung oder Suspension, gegebenenfalls unter Zusatz eines inerten organischen Lösemittels, wobei die Umsetzung je nach Reaktionsfreudigkeit der Ausgangskomponenten, insbesondere der halogensubstituierten heterocyclischen Verbindungen, bei einer Temperatur zwischen 0 und 70°C und bei einem pH-Wert zwischen 3 und 8 erfolgt. Diese Umsetzungen sind im übrigen dem Fachmann geläufig und lassen sich in fachmännischer Weise variieren, um zu einer befriedigenden Synthese zu gelangen.

Bei der Umsetzung der Aminoverbindungen der allgemeinen Formeln $R^3R^4NH$ , $R^5R^6NH$ und $R^7R^8NH$ mit einer oben bezeichneten Dihalogeno-s-triazinylamino-Azoverbindung verläuft in der Regel bei einer Temperatur zwischen 10 und 60°C und einem pH-Wert zwischen 3 und 9, wobei diese Reaktionsbedingungen stark von der Struktur und Basizität der Amine abhängig sind. Auch diese Umsetzungsvarianten und -bedingungen sind dem Fachmann aus der Literatur und unter Beachtung seines Fachwissens geläufig.

Ausgangsverbindungen der allgemeinen Formel (9) sind 1-Amino-8-naphthol-3,6-disulfonsäure und 1-Amino-8-naphthol-4,6-disulfonsäure.

Ausgangsverbindungen der allgemeinen Formel (10) sind beispielsweise Bernsteinsäureanhydrid, Methylbernsteinsäureanhydrid, 1 ,1-Dimethylbernsteinsäureanhydrid, 1 ,2-Dimethylbernsteinsäureanhydrid, 1,1,2-Trimethylbernsteinsäure, Glutarsäureanhydrid, 2-Phenylglutarsäureanhydrid, 1,3-Dimethylglutarsäureanhydrid, 1-Methylglutarsäureanhydrid, 2-Methylglutarsäureanhydrid und 1,1,3-Trimethylglutarsäureanhydrid.

Ausgangsverbindungen der allgemeinen Formel (13) sind beispielsweise 1,4-Diamino-benzol, 1,3-Diaminobenzol, 2-Sulfo-1,4-diaminobenzol, 4-Sulfo-1,3-diaminobenzol, 4,6-Disulfo-1,3-diaminobenzol, 2,5-Disulfo-1,4-diaminobenzol, 2-Methyl-1,4-diaminobenzol, 4-Methyl-1,3-diaminobenzol, 4-Sulfo-6-methyl-1,3-diaminobenzol und 4-Sulfo-6-methoxy-1,3-diaminobenzol sowie 3-Sulfo-2,6-dimethyl-5-[(N-methylamino)-methyl]-anilin, 2-Sulfo-4-methyl-6-aminoethyl-anilin, 3-Sulfo-4-[(N-methylamino)-methyl]-anilin und 1-Sulfo-5-aminomethyl-2-amino-naphthalin.

Ausgangsverbindungen der allgemeinen Formeln (3a) bis (3d) sind beispielsweise 2,4,6-Trifluor-5-chlor-pyrimidin und 2,4,6-Trifluor-pyrimidin.

Die Abscheidung und Isolierung der erfindungsgemäßen Monoazoverbindungen der allgemeinen Formel (1) aus den wäßrigen Syntheselösungen kann nach allgemein bekannten Methoden für wasserlösliche Verbindungen erfolgen, so beispielsweise durch Ausfällen aus dem Reaktionsmedium mittels eines Elektrolyten, wie beispielsweise Natriumchlorid oder Kaliumchlorid, oder durch Eindampfen der Reaktionslösung selbst, beispielsweise durch Sprühtrocknung. Falls die letztgenannte Art der Isolierung gewählt wird, empfiehlt es sich vielfach, vor dem Eindampfen eventuell in den Lösungen vorhandene Sulfatmengen durch Fällung als Calciumsulfat und Abtrennung mittels Filtration zu entfernen.

Die erfindungsgemäßen Monoazoverbindungen der allgemeinen Formel (1) haben faserreaktive Eigenschaften und besitzen sehr wertvolle Farbstoffeigenschaften. Sie können deshalb zum Färben (einschließlich Bedrucken) von hydroxygruppenhaltigen und/oder carbonamidgruppenhaltigen Materialien verwendet werden. Hierzu können die bei der Synthese der erfindungsgemäßen Monoazoverbindungen der allgemeinen Formel (1) anfallenden Lösungen, gegebenenfalls nach Zusatz einer Puffersubstanz und gegebenenfalls auch nach Konzentrierung, direkt als Flüssigpräparation der färberischen Verwendung zugeführt werden.

Gegenstand der vorliegenden Erfindung ist deshalb auch die Verwendung der erfindungsgemäßen Monoazoverbindungen der allgemeinen Formel (1) zum Färben (einschließlich Bedrucken) von hydroxy- und/oder carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben. Hierbei kann man analog bekannten Verfahrensweisen vorgehen.

Hydroxygruppenhaltige Materialien sind solche natürlichen oder synthetischen Ursprungs, wie beispielsweise Cellulosefasermaterialien oder deren Regenerationsprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die Fasermaterialien lassen sich auch in Gemischen miteinander verarbeiten und färben oder können Fasermaterialien anderer chemischer Natur enthalten, wie Polyesterfasern. Beispiele hierfür sind Mischgewebe aus Cellulosefasern und Polyesterfasern sowie aus Cellulosefasern und Polyamidfasern.

Die erfindungsgemäßen Monoazoverbindungen der allgemeinen Formel (1) lassen sich auf den genannten Substraten, insbesondere auf den genannten Fasermaterialien, nach den für wasserlösliche, faserreaktive Farbstoffe bekannten Anwendungstechniken applizieren und fixieren, so beispielsweise, indem man sie in gelöster Form auf das Substrat aufbringt oder sie darin einbringt und sie auf diesem oder in diesem durch Hitzeeinwirkung oder durch Einwirkung eines alkalisch wirkenden Mittels oder durch beide Maßnahmen fixiert. Solche Färbe-und Fixierweisen sind in der Literatur zahlreich beschrieben (z.B. in der EP-A 181 585).

So eignen sich die erfindungsgemäßen Monoazoverbindungen der allgemeinen Formel (1) sowohl für das Auszieh-Färbeverfahren als auch zum Färben nach dem Foulard-Färbeverfahren, wonach die Ware mit wäßrigen, gegebenenfalls elektrolytsalzhaltigen Lösungen der erfindungsgemäßen Monoazoverbindungen der allgemeinen Formel (1) imprägniert und diese in der oben angegebenen Weise auf dem Material fixiert wird. Besonders geeignet sind die erfindungsgemäßen Monoazoverbindungen der allgemeinen Formel (1) in der Anwendung nach den sogenannten Kaltverweilverfahren, wonach ein Farbstoff zusammen mit den alkalisch wirkenden Mitteln auf dem Foulard auf das Fasermaterial aufgebracht wird, auf dem er nach mehrstündigen Lagern bei Raumtemperatur fixiert. Nach dem Fixieren werden die erhaltenen Färbungen und Drucke mit kaltem und heißem Wasser, gegebenenfalls unter Zusatz eines dispergierend wirkenden und die Diffusion der nicht fixierten Anteile fordernden Mittels, gründlich gespült.

Die erfindungsgemäßen Monoazoverbindungen der allgemeinen Formel (1) zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern bei Pad-Steam-Verfahren nur kurze Dämpfzeiten. Die Fixiergrade sind hoch und nicht fixierte Anteile können leicht ausgewachen werden wobei die Differenz zwichen Ausziehgrad und Fixiergrad bemerkenswert klein ist, weswegen auch der Seifverlust sehr gering ist. Die erfindungsgemäßen Monoazoverbindungen der allgemeinen Formel (1) eignen sich auch besonders in den Textildruckverfahren, vor allem auf Cellulosefasermaterialien, wie Baumwolle, ebenso aber auch zum Bedrucken von carbonamidgruppenhaltigem Fasermaterial, wie beispielsweise Wolle und Seide oder Mischgeweben, die Wolle oder Seide

enthalten. Sie sind weiterhin sehr gut für den Einsatz in die Ätzdruck- und Reservedruck-Verfahren geeignet.
Die mit den erfindungsgemäßen Monoazoverbindungen der allgemeinen Formel (1) hergestellten Färbungen und Drucke besitzen, insbesondere auch Cellulosefasermaterialen, eine hohe Farbstärke und eine hohe Bindungsstabilität zur Faser sowohl im sauren als auch im alkalischen Bereich, weiterhin eine gute Lichtechtheit, einschließlich einer sehr guten Naßlichtechtheit, sowie allgemein gute Naßechtheiten, wie gute Wasch-, Wasser-, Seewasser-, Überfärbe- und Schweißechtheiten, des weiteren eine gute Plissierechtheit, Bügelechtheit und Reibechtheit.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.
Die in den Beispielen formelmäßig beschriebenen Verbindungen sind in Form der freien Säuren angegeben; im allgemeinen werden sie in Form ihrer Alkalimetallsalze, wie Lithium-, Natrium- oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Verbindungen angegebenen Absorptionsmaxima ($\lambda_{max}$) im sichtbaren Bereich wurden anhand der Alkalimetallsalze in wäßriger Lösung ermittelt. In den Tabellenbeispielen sind die $\lambda_{max}$-Werte bei der Farbtonangabe in Klammern gesetzt. Die Wellenlängeangabe bezieht sich auf nm. Bei Verwendung unsymmetrischer Anhydride der allgemeinen Formel (10) ist jeweils nur eines der beiden möglichen Reaktionsprodukte gezeichnet.

Beispiel 1

Eine neutrale Lösung des Natriumsalzes aus 319 Teilen 1-Amino-3,6-disulfo-8-naphthol in 4000 Teilen Eiswasser werden mit 105 Teilen Bernsteinsäureanhydrid versetzt. Der Ansatz wird noch etwa fünf Stunden bei einem pH-Wert von 5 und einer Temperatur von 0 bis 5°C weitergerührt.

In einem getrennten Ansatz wird eine neutrale Lösung von 252 Teilen 1-Sulfo-5-methylamino-2-amino-naphthalin und 71 Teilen Natriumnitrit in 2500 Teilen Wasser von 5°C langsam und stetig unter guten Rühren auf ein Gemisch aus 2000 Teilen Eis und 300 Vol.-Teilen konzentrierter wäßriger Salzsäure gegeben. Man rührt noch eine Stunde weiter und beseitigt in üblicher Weise überschüssiges Nitrit unter Amidosulfonsäure. Die Diazoniumsalzsuspension wird sodann zu dem anfangs hergestellten Ansatz mit der Kupplungskomponente gegeben, und die Kupplungsreaktion wird während etwa einer Stunde bei einem pH-Wert von 7 und einer Temperatur von etwa 20°C durchgeführt. Anschließend wird der Ansatz auf 40°C erwärmt und auf einen pH-Wert von 8 gestellt; 187 Teile 2,4,6-Trifluor-5-chlor-pyridimin werden stetig unter gutem Rühren und Einhaltung eines pH-Wertes von 8 und einer Temperatur von 40°C eingerührt.

Nach einer Reaktionszeit von etwa einer Stunde wird die Lösung auf einen pH-Wert von 7,5 gestellt und die erfindungsgemäße Monoazoverbindung nach Abkühlen der Reaktionslösung mittels Natriumchlorid ausgesalzen. Die erfindungsgemäße Monoazoverbindung besitzt, in Form der freien Säure geschrieben, die Formel

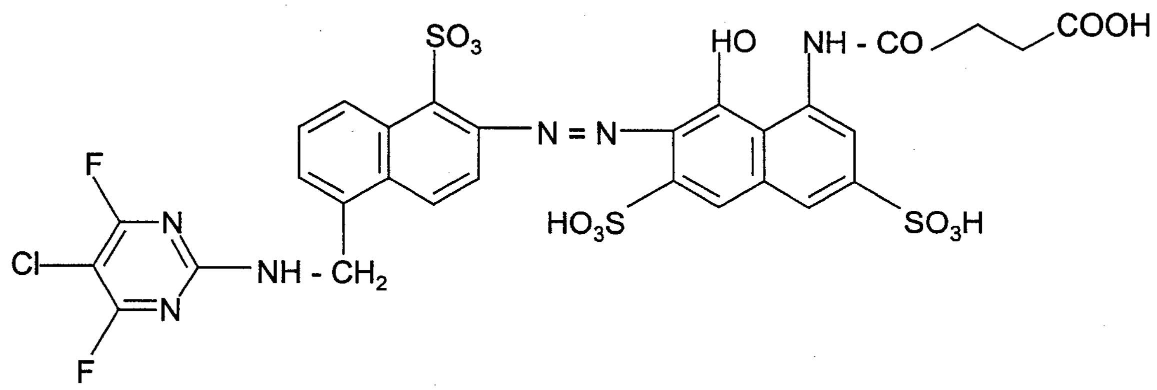

($\lambda_{max}$ = 537 nm)

und färbt beispielsweise Baumwolle nach den in der Technik für faserreaktive Farbstoffe üblichen Färbe- und Druckverfahren in kräftigen roten Tönen mit guten Echtheitseigenschaften, von denen insbesondere die guten Licht- und Waschechtheiten hervorgehoben werden können.

Beispiel 2

Eine Lösung mit einem pH-Wert von 6,5 von 281 Teilen 4-(β-Sulfatoethyl-sulfonyl)-anilin und 40 Teilen Natriumfluorid in 3500 Teilen Eiswasser werden unter langsamer Zugabe und gutem Rühren mit 150 Teilen Cyanurfluorid gemäß der Verfahrensweise der DE-A 27 46 109 umgesetzt. Nach erfolgter Umsetzung werden dem Ansatz 180 Teile 1,3-Diaminobenzol-4-sulfonsäure hinzugegeben, der pH-Wert mit Natriumcarbonat auf 6,5 gestellt und unter Einhaltung des pH-Wertes und einer Temperatur von 0 bis 10°C während etwa drei Stunden weitergerührt.

Der Ansatz wird anschließend auf 0°C abgekühlt und die erhaltene Aminoverbindung in an und für sich bekannter Verfahrensweise mittels Natriumnitrit und konzentrierter Salzsäure diazotiert. Die erhaltene Diazoniumsalzlösung wird sodann zu der Lösung der Kupplungskomponente gegeben, die aus 319 Teilen 1-Amino-3,6-disulfo-8-naphthol und 150 Teilen 1,3-Dimethylglutarsäureanhydrid hergestellt wurde. Die Kupplungsreaktion erfolgt bei einem pH-Wert zwischen 5,5 und 6,5 und einer Temperatur von etwa 15°C. Die erhaltene Syntheselösung mit der erfindungsgemäßen Monoazoverbindung der Formel (in Form der freien Säure geschrieben)

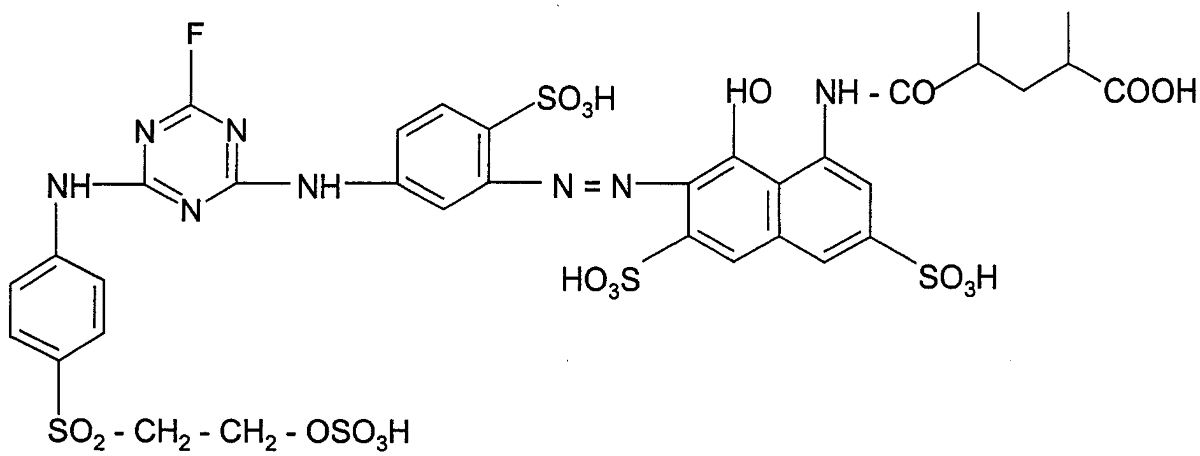

($\lambda_{max}$ = 516 nm)

wird mit einem Gemisch aus sekundären und primären Natriumhydrogenphosphat auf einen pH-Wert von 7 abgepuffert und die erfindungsgemäße Monoazoverbindung sodann mit Natriumchlorid ausgesalzen und isoliert. Sie zeigt sehr gute faserreaktive Farbstoffeigenschaften und färbt beispielsweise Baumwolle in farbstarken roten Tönen mit guten Echtheitseigenschaften.

Beispiel 3

Eine Lösung mit einem pH-Wert von 6,5 von 281 Teilen 4-(β-Sulfatoethyl-sulfonyl)-anilin und 40 Teilen Natriumfluorid in 3500 Teilen Eiswasser werden unter langsamer Zugabe und gutem Rühren mit 150 Teilen Cyanurfluorid gemäß der Verfahrensweise der DE-A 27 46 109 umgesetzt. Nach erfolgter Umsetzung werden dem Ansatz 180 Teile 1,3-Diaminobenzol-4-sulfonsäure hinzugegeben, der pH-Wert mit Natriumcarbonat auf 6,5 gestellt und unter Einhaltung des pH-Wertes und einer Temperatur von 0 bis 10°C während etwa drei Stunden weitergerührt.

Der Ansatz wird anschließend auf 0°C abgekühlt und die erhaltene Aminoverbindung in an und für sich bekannter Verfahrensweise mittels Natriumnitrit und konzentrierter Salzsäure diazotiert. Die erhaltene Diazoniumsalzlösung wird sodann zu der Lösung der Kupplungskomponente gegeben, die aus 319 Teilen 1-Amino-3,6-disulfo-8-naphthol und 135 Teilen 1-Methylglutarsäureanhydrid hergestellt wurde. Die Kupplungsreaktion erfolgt bei einem pH-Wert zwischen 5,5 und 6,5 und einer Temperatur von etwa 15°C.

Die erhaltene Syntheselösung mit der erfindungsgemäßen Monoazoverbindung der Formel (in Form der freien Säure geschrieben)

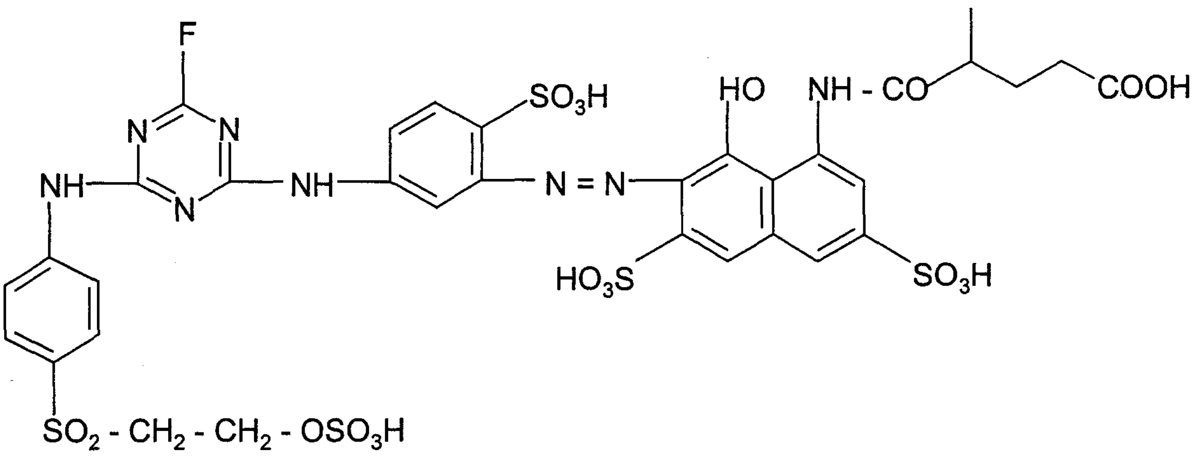

($\lambda_{max}$ = 518 nm)

wird mit einem Gemisch aus sekundären und primären Natriumhydrogenphosphat auf einen pH-Wert von 7 abgepuffert und die erfindungsgemäße Monoazoverbindung sodann mit Natriumchlorid ausgesalzen und isoliert. Sie zeigt sehr gute faserreaktive Farbstoffeigenschaften und färbt beispielsweise Baumwolle in farbstarken roten Tönen mit guten Echtheitseigenschaften.

Beispiel 4

Eine Lösung mit einem pH-Wert von 6,5 von 281 Teilen 4-(β-Sulfatoethyl-sulfonyl)-anilin und 40 Teilen Natriumfluorid in 3500 Teilen Eiswasser werden unter langsamer Zugabe und gutem Rühren mit 150 Teilen Cyanurfluorid gemäß der Verfahrensweise der DE-A 27 46 109 umgesetzt. Nach erfolgter Umsetzung werden dem Ansatz 180 Teile 1,3-Diaminobenzol-4-sulfonsäure hinzugegeben, der pH-Wert mit Natriumcarbonat auf 6,5 gestellt und unter Einhaltung des pH-Wertes und einer Temperatur von 0 bis 10°C während etwa drei Stunden weitergerührt.

Der Ansatz wird anschließend auf 0°C abgekühlt und die erhaltene Aminoverbindung in an und für sich bekannter Verfahrensweise mittels Natriumnitrit und konzentrierter Salzsäure diazotiert. Die erhaltene Diazoniumsalzlösung wird sodann zu der Lösung der Kupplungskomponente gegeben, die aus 319 Teilen 1-Amino-4,6-disulfo-8-naphthol und 120 Teilen 1-Methylbernsteinsäureanhydrid hergestellt wurde. Die Kupplungsreaktion erfolgt bei einem pH-Wert zwischen 5,5 und 6,5 und einer Temperatur von etwa 15°C.

Die erhaltene Syntheselösung mit der erfindungsgemäßen Monoazoverbindung der Formel (in Form der freien Säure geschrieben)

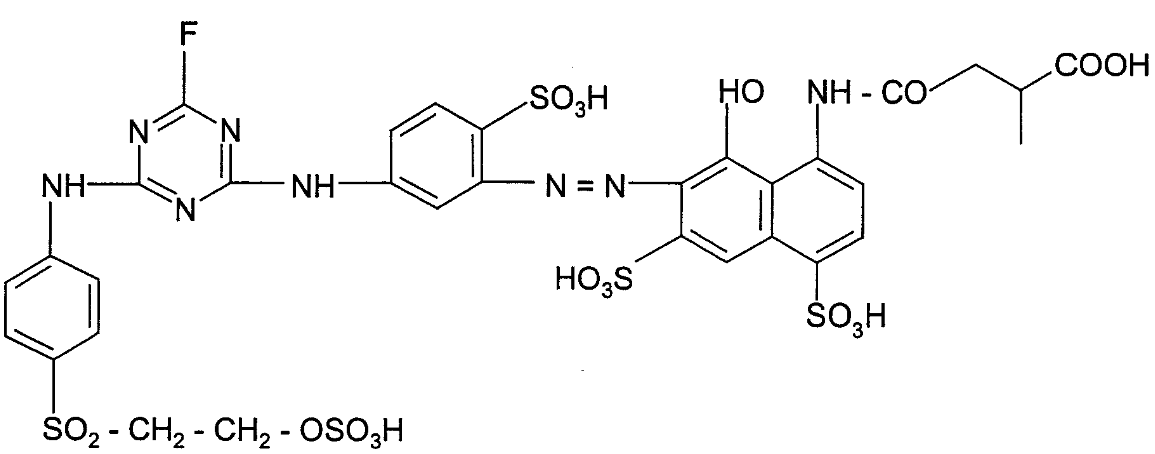

($\lambda_{max}$ = 505 nm)

wird mit einem Gemisch aus sekundären und primären Natriumhydrogenphosphat auf einen pH-Wert von 7 abgepuffert und die erfindungsgemäße Monoazoverbindung sodann mit Natriumchlorid ausgesalzen und isoliert. Sie zeigt sehr gute faserreaktive Farbstoffeigenschaften und färbt beispielsweise Baumwolle in farbstarken roten Tönen mit guten Echtheitseigenschaften.

Beispiel 5

Eine Lösung mit einem pH-Wert von 6,5 von 281 Teilen 3-(β-Sulfatoethyl-sulfonyl)-anilin und 40 Teilen Natriumfluorid in 3500 Teilen Eiswasser werden unter langsamer Zugabe und gutem Rühren mit 150 Teilen Cyanurfluorid gemäß der Verfahrensweise der DE-A 27 46 109 umgesetzt. Nach erfolgter Umsetzung werden dem Ansatz 180 Teile 1,3-Diaminobenzol-4-sulfonsäure hinzugegeben, der pH-Wert mit Natriumcarbonat auf 6,5 gestellt und unter Einhaltung des pH-Wertes und einer Temperatur von 0 bis 10°C während etwa drei Stunden weitergerührt.

Der Ansatz wird anschließend auf 0°C abgekühlt und die erhaltene Aminoverbindung in an und für sich bekannter Verfahrensweise mittels Natriumnitrit und konzentrierter Salzsäure diazotiert. Die erhaltene Diazoniumsalzlösung wird sodann zu der Lösung der Kupplungskomponente gegeben, die aus 319 Teilen 1-Amino-3,6-disulfo-8-naphthol und 120 Teilen Glutarsäureanhydrid hergestellt wurde. Die Kupplungsreaktion erfolgt bei einem pH-Wert zwischen 5,5 und 6,5 und einer Temperatur von etwa 15°C.

Die erhaltene Syntheselösung mit der erfindungsgemäßen Monoazoverbindung der Formel (in Form der freien Säure geschrieben)

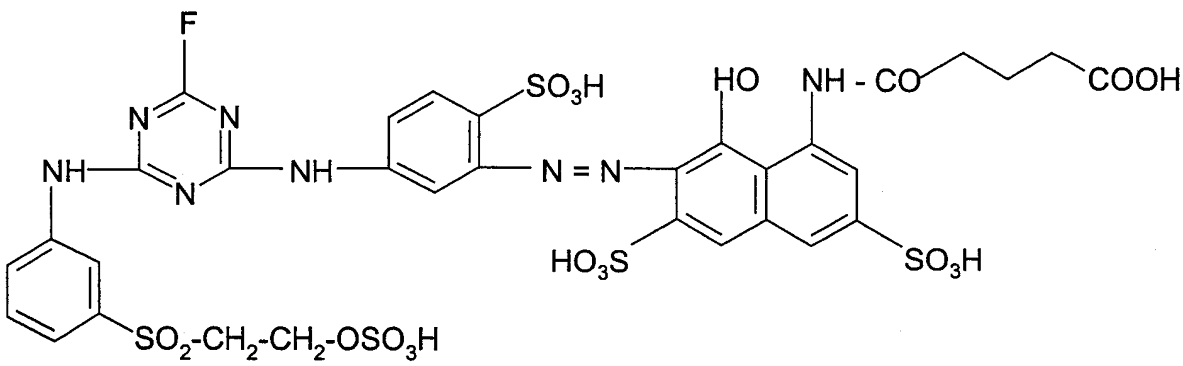

($\lambda_{max}$ = 515 nm)

wird mit einem Gemisch aus sekundären und primären Natriumhydrogenphosphat auf einen pH-Wert von 7 abgepuffert und die erfindungsgemäße Monoazoverbindung sodann mit Natriumchlorid ausgesalzen und isoliert. Sie zeigt sehr gute faserreaktive Farbstoffeigenschaften und färbt beispielsweise Baumwolle in farbstarken roten Tönen mit guten Echtheitseigenschaften.

Beispiel 6

Eine Lösung mit einem pH-Wert von 6,5 von 281 Teilen 3-(β-Sulfatoethyl-sulfonyl)-anilin und 40 Teilen Natriumfluorid in 3500 Teilen Eiswasser werden unter langsamer Zugabe und gutem Rühren mit 150 Teilen Cyanurfluorid gemäß der Verfahrensweise der DE-A 27 46 109 umgesetzt. Nach erfolgter Umsetzung werden dem Ansatz 180 Teile 1,3-Diaminobenzol-4-sulfonsäure hinzugegeben, der pH-Wert mit Natriumcarbonat auf 6,5 gestellt und unter Einhaltung des pH-Wertes und einer Temperatur von 0 bis 10°C während etwa drei Stunden weitergerührt.

Der Ansatz wird anschließend auf 0°C abgekühlt und die erhaltene Aminoverbindung in an und für sich bekannter Verfahrensweise mittels Natriumnitrit und konzentrierter Salzsäure diazotiert. Die erhaltene Diazoniumsalzlösung wird sodann zu der Lösung der Kupplungskomponente gegeben, die aus 319 Teilen 1-Amino-3,6-disulfo-8-naphthol und 136 Teilen 1,2-Dimethylbernsteinsäureanhydrid hergestellt wurde. Die Kupplungsreaktion erfolgt bei einem pH-Wert zwischen 5,5 und 6,5 und einer Temperatur von etwa 15°C.

Die erhaltene Syntheselösung mit der erfindungsgemäßen Monoazoverbindung der Formel (in Form der freien Säure geschrieben)

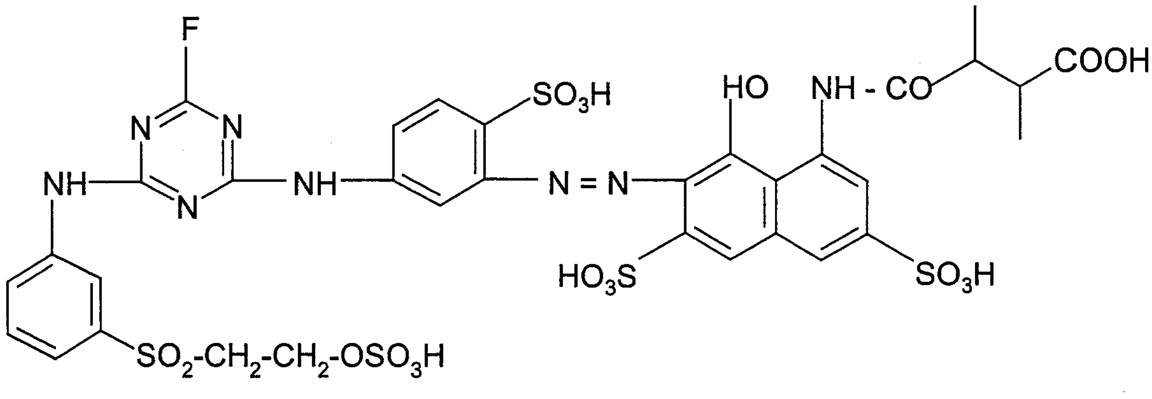

($\lambda_{max}$ = 516 nm)

wird mit einem Gemisch aus sekundären und primären Natriumhydrogenphosphat auf einen pH-Wert von 7 abgepuffert und die erfindungsgemäße Monoazoverbindung sodann mit Natriumchlorid ausgesalzen und isoliert. Sie zeigt sehr gute faserreaktive Farbstoffeigenschaften und färbt beispielsweise Baumwolle in farbstarken roten Tönen mit guten Echtheitseigenschaften.

Beispiel 7

Eine Lösung mit einem pH-Wert von 6,5 von 281 Teilen 4-(β-Sulfatoethyl-sulfonyl)-anilin und 40 Teilen Natriumfluorid in 3500 Teilen Eiswasser werden unter langsamer Zugabe und gutem Rühren mit 150 Teilen Cyanurfluorid gemäß der Verfahrensweise der DE-A 27 46 109 umgesetzt. Nach erfolgter Umsetzung werden dem Ansatz 180 Teile 1,3-Diaminobenzol-4-sulfonsäure hinzugegeben, der pH-Wert mit Natriumcarbonat auf 6,5 gestellt und unter Einhaltung des pH-Wertes und einer Temperatur von 0 bis 10°C während etwa drei Stunden weitergerührt.

Der Ansatz wird anschließend auf 0°C abgekühlt und die erhaltene Aminoverbindung in an und für sich bekannter Verfahrensweise mittels Natriumnitrit und konzentrierter Salzsäure diazotiert. Die erhaltene Diazoniumsalzlösung wird sodann zu der Lösung der Kupplungskomponente gegeben, die aus 319 Teilen 1-Amino-4,6-disulfo-8-naphthol und 107 Teilen Bernsteinsäureanhydrid hergestellt wurde. Die Kupplungsreaktion erfolgt bei einem pH-Wert zwischen 5,5 und 6,5 und einer Temperatur von etwa 15 °C.

Die erhaltene Syntheselösung mit der erfindungsgemäßen Monoazoverbindung der Formel (in Form der freien Säure geschrieben)

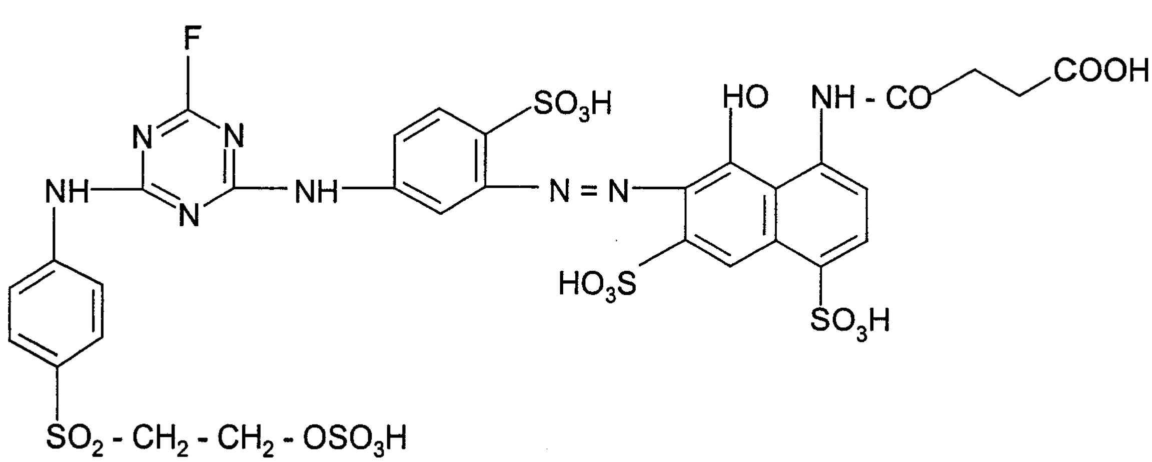

($\lambda_{max}$ = 507 nm)

wird mit einem Gemisch aus sekundären und primären Natriumhydrogenphosphat auf einen pH-Wert von 7 abgepuffert und die erfindungsgemäße Monoazoverbindung sodann mit Natriumchlorid ausgesalzen und isoliert. Sie zeigt sehr gute faserreaktive Farbstoffeigenschaften und färbt beispielsweise Baumwolle in farbstarken roten Tönen mit guten Echtheitseigenschaften.

Beispiel 8

Eine Lösung mit einem pH-Wert von 6,5 von 281 Teilen 3-(β-Sulfatoethyl-sulfonyl)-anilin und 40 Teilen Natriumfluorid in 3500 Teilen Eiswasser werden unter langsamer Zugabe und gutem Rühren mit 150 Teilen Cyanurfluorid gemäß der Verfahrensweise der DE-A 27 46 109 umgesetzt. Nach erfolgter Umsetzung werden dem Ansatz 180 Teile 1,3-Diaminobenzol-4-sulfonsäure hinzugegeben, der pH-Wert mit Natriumcarbonat auf 6,5 gestellt und unter Einhaltung des pH-Wertes und einer Temperatur von 0 bis 10°C während etwa drei Stunden weitergerührt.

Der Ansatz wird anschließend auf 0°C abgekühlt und die erhaltene Aminoverbindung in an und für sich bekannter Verfahrensweise mittels Natriumnitrit und konzentrierter Salzsäure diazotiert. Die erhaltene Diazoniumsalzlösung wird sodann zu der Lösung der Kupplungskomponente gegeben, die aus 319 Teilen 1-Amino-3,6-disulfo-8-naphthol und 107 Teilen Bernsteinsäureanhydrid hergestellt wurde. Die Kupplungsreaktion erfolgt bei einem pH-Wert zwischen 5,5 und 6,5 und einer Temperatur von etwa 15°C.

Die erhaltene Syntheselösung mit der erfindungsgemäßen Monoazoverbindung der Formel (in Form der freien Säure geschrieben)

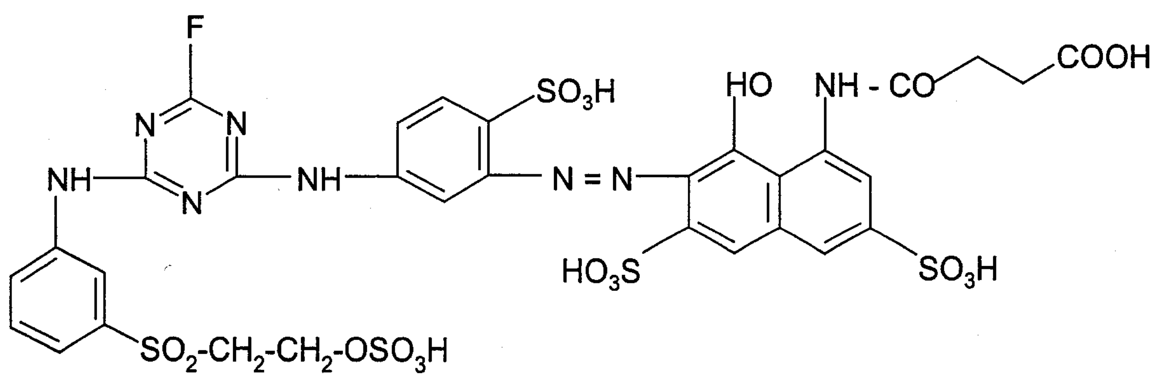

($\lambda_{max}$ = 516 nm)

wird mit einem Gemisch aus sekundären und primären Natriumhydrogenphosphat auf einen pH-Wert von 7 abgepuffert und die erfindungsgemäße Monoazoverbindung sodann mit Natriumchlorid ausgesalzen und isoliert. Sie zeigt sehr gute faserreaktive Farbstoffeigenschaften und färbt beispielsweise Baumwolle in farbstarken roten Tönen mit guten Echtheitseigenschaften.

Beispiel 9

Eine Lösung mit einem pH-Wert von 6,5 von 173 Teilen Anilin-2-sulfonsäure und 40 Teilen Natriumfluorid in 3500 Teilen Eiswasser werden unter langsamer Zugabe und gutem Rühren mit 150 Teilen Cyanurfluorid gemäß der Verfahrensweise der DE-A 27 46 109 umgesetzt. Nach erfolgter Umsetzung werden dem Ansatz 180 Teile 1,3-Diaminobenzol-4-sulfonsäure hinzugegeben, der pH-Wert mit Natriumcarbonat auf 6,5 gestellt und unter Einhaltung des pH-Wertes und einer Temperatur von 0 bis 10°C während etwa drei Stunden weitergerührt.

Der Ansatz wird anschließend auf 0°C abgekühlt und die erhaltene Aminoverbindung in an und für sich bekannter Verfahrensweise mittels Natriumnitrit und konzentrierter Salzsäure diazotiert. Die erhaltene Diazoniumsalzlösung wird sodann zu der Lösung der Kupplungskomponente gegeben, die aus 319 Teilen 1-Amino-3,6-disulfo-8-naphthol und 120 Teilen Glutarsäureanhydrid hergestellt wurde. Die Kupplungsreaktion erfolgt bei einem pH-Wert zwischen 5,5 und 6,5 und einer Temperatur von etwa 15°C.

Die erhaltene Syntheselösung mit der erfindungsgemäßen Monoazoverbindung der Formel (in Form der freien Säure geschrieben)

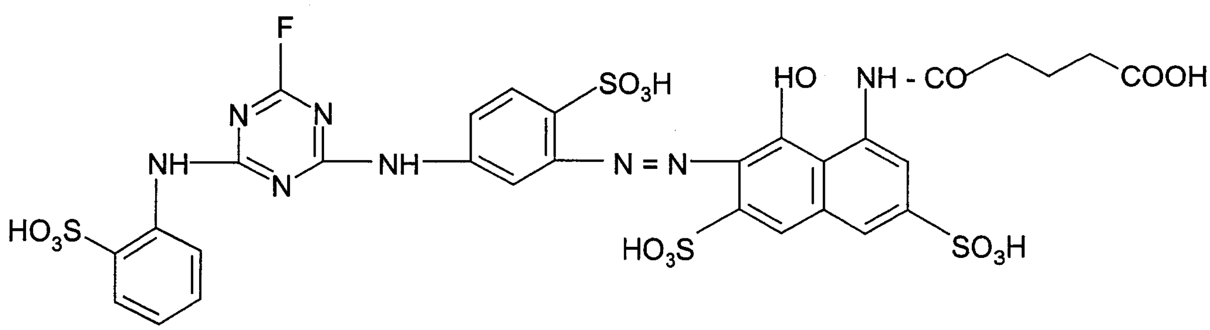

($\lambda_{max}$ = 516 nm)

wird mit einem Gemisch aus sekundären und primären Natriumhydrogenphosphat auf einen pH-Wert von 7 abgepuffert und die erfindungsgemäße Monoazoverbindung sodann mit Natriumchlorid ausgesalzen und isoliert. Sie zeigt sehr gute faserreaktive Farbstoffeigenschaften und färbt beispielsweise Baumwolle in farbstarken roten Tönen mit guten Echtheitseigenschaften.

Beispiele 10 bis 23

In den nachfolgenden Tabellenbeispielen sind weitere erfindungsgemäße Monoazoverbindungen entsprechend der allgemeinen Formel (A)

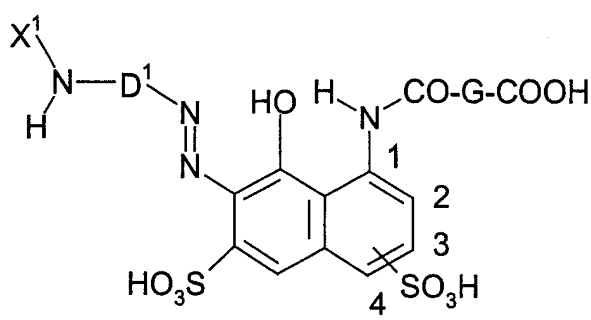

(A)

mit Hilfe ihrer Komponenten beschrieben. Sie lassen sich nach einer der erfindungsgemäßen Herstellungsweisen, beispielsweise analog einem der obigen Beispiele, unter Einsatz der aus dem jeweiligen Tabellenbeispiel in Verbindung mit der allgemeinen Formel (A) ersichtlichen Ausgangsverbindungen (wie der Diazokomponente $X^1$-NH-$D^1$-$NH_2$ bzw. dem Diamin $H_2N$-$D^1$-$NH_2$ und der halogensubstituierten heterocyclischen Verbindung $X^1$-Hal, der Aminonaphthol-sulfonsäure-Verbindung und dem Anhydrid entsprechend der allgemeinen Formel (10)) herstellen. Sie besitzen sehr gute faserreaktive Farbstoffeigenschaften und färben die in der Beschreibung genannten Materialien, insbesondere Cellulosefasermaterialien, wie Baumwolle, in dem in dem jeweiligen Tabellenbeispiel (hier für Baumwolle) angegebenen Farbton in hoher Farbstärke und mit guten Echtheiten.

| Bsp. | Rest $X^1$-NH-$D^1$- | Stellung -$SO_3H$ | Rest G | Farbton |
|---|---|---|---|---|
| 10 | 3-(2',4'-Difluor-pyrimidin-6'-yl)-amino-6-sulfo-phenyl | 3- | -$CH_2$-$CH_2$- | Rot |

(fortgesetzt)

| Bsp. | Rest $X^1$-NH-$D^1$- | Stellung $-SO_3H$ | Rest G | Farbton |
|---|---|---|---|---|
| 11 | 3-N-{2'-Fluor-4'-[4"-(β-sulfatoethylsulfonyl)-phenylamino]-1',3',5'-triazin-6'-yl]}-amino-6-sulfo-phenyl | 3- | $-CH(CH_3)-CH_2-$ | Rot |
| 12 | dito | 4- | $-CH_2-CH_2-CH_2-$ | Rot |
| 13 | 3-N-{2'-Fluor-4'-[3"-(β-sulfatoethylsulfonyl)-phenylamino]-1',3',5'-triazin-6'-yl]}-amino-6-sulfo-phenyl | 3- | $-CH_2-CH_2-$ | Rot |
| 14 | 3-N-{2'-Fluor-4'-[4"-(β-sulfatoethylsulfonyl)-phenylamino]-1',3',5'-triazin-6'-yl]}-amino-6-sulfo-phenyl | 4- | $-CH(CH_3)-CH_2-CH_2-$ | Rot |
| 15 | 3-N-{2'-Fluor-4'-[N'-phenyl-N'-β-(β'-sulfatoethyl-sulfonyl)-ethyl]-amino-6'-yl}-amino-6-sulfo-phenyl | 4- | $-CH_2-CH_2-$ | Rot |
| 16 | 3-N-{2'-Fluor-4'-[N'-phenyl-N'-β-(β'-sulfatoethyl-sulfonyl)-ethyl]-amino-6'- '-yl}-amino-6-sulfo-phenyl | 3- | $-CH_2-CH_2-$ | Rot |
| 17 | 3-(2',4'-Difluor-pyrimidin-6'-yl)-amino-6-sulfo-phenyl | 4- | $-CH_2-CH_2-CH_2-$ | Rot |
| 18 | 3-N-{2'-Fluor-4'-[4"-(β-vinylsulfonyl)-phenylamino]-1',3',5'-triazin-6'-yl]}-amino-6-sulfo-phenyl | 3- | $-CH_2-CH_2-$ | Rot |
| 19 | Dito | 3- | $-CH(CH_3)-CH_2-CH_2-$ | Rot |
| 20 | 3-N-{2'-Fluor-4'-[3"-(β-sulfatoethylsulfonyl)-phenylamino]-1',3',5'-triazin-6'-yl]}-amino-6-sulfo-phenyl | 4- | $-CH_2-CH_2-$ | Rot |
| 21 | 3-N-{2'-Fluor-4'-[4"-(β-sulfatoethylsulfonyl)-phenylamino]-1',3',5'-triazin-6'-yl]}-amino-6-sulfo-phenyl | 3- | $-CH(CH_3)-CH_2(CH_3)-CH(CH_3)$ - | Rot |
| 22 | 3-N-{2'-Fluor-4'-[N'-phenyl-N'-β-(β'-sulfatoethyl-sulfonyl)-ethyl]-amino-6'-yl}-amino-6-sulfo-phenyl | 4- | $-CH_2-CH_2-CH_2-$ | Rot |
| 23 | 3-N-{2'-Fluor-4'-[N'-phenyl-N'-β-(β'-sulfatoethyl-sulfonyl)-ethyl]-amino-6'-yl}-amino-6-sulfo-phenyl | 3- | -CH(CH3)-CH2-CH(CH3)- | Rot |
| 24 | 3-(2',4'-Difluor-pyrimidin-6'-yl)-amino-6-sulfo-phenyl | 3- | $-CH_2-CH_2-CH_2-CH_2$ | Rot |
| 25 | 3-N-{2'-Fluor-4'-[4"-(β-sulfatoethylsulfonyl)-phenylamino]-1',3',5'-triazin-6'-yl]}-amino-6-sulfo-phenyl | 4- | $-CH(CH_3)-CH(CH_3)-$ | Rot |
| 26 | dito | 4- | $-CH_2-CH_2-CH_2-$ | Rot |
| 27 | 3-N-{2'-Fluor-4'-[3"-(β-sulfatoethylsulfonyl)-phenylamino]-1',3',5'-triazin-6'-yl]}-amino-6-sulfo-phenyl | 3- | $-CH_2-CH_2-CH(CH_3)-$ | Rot |
| 28 | 3-N-{2'-Fluor-4'-[4"-(β-sulfatoethylsulfonyl)-phenylamino]-1 ',3',5'-triazin-6'-yl]}-amino-6-sulfo-phenyl | 4- | $-CH(CH_3)-CH_2-CH(CH_3)-$ | Rot |

(fortgesetzt)

| Bsp. | Rest $X^1$-NH-$D^1$- | Stellung -$SO_3H$ | Rest G | Farbton |
|---|---|---|---|---|
| 29 | 3-N-{2'-Fluor-4'-[N'-phenyl-N'-β-(β'-sulfatoethyl-sulfonyl)-ethyl]-amino-6'-yl}-amino-6-sulfo-phenyl | 4- | -CH( $CH_3$)-$CH_2$-$CH_2$- | Rot |
| 30 | 3-N-{2'-Fluor-4'-[N'-phenyl-N'-β-(β'-sulfatoethyl-sulfonyl)-ethyl]-amino-6'-yl}-amino-6-sulfo-phenyl | 3- | -CH($CH_3$)-$CH_2$-$CH_2$- | Rot |
| 31 | 3-(2',4'-Difluor-pyrimidin-6'-yl)-amino-6-sulfo-phenyl | 3- | -$CH_2$-$CH_2$-$CH_2$- | Rot |
| 32 | 3-(2',4'-Difluor-pyrimidin-6-yl)-amino-6-sulfo-phenyl | 3- | -CH($CH_3$)-$CH_2$-$CH_2$- | |
| 33 | 3-(2',4'-Difluor-pyrimidin-6-yl)-amino-6-sulfo-phenyl | 4- | -CH($CH_3$)-$CH_2$-$CH_2$- | |
| 34 | 3-(2',4'-Difluor-pyrimidin-6-yl)-amino-6-sulfo-phenyl | 3- | -CH($CH_3$)-$CH_2$- | |
| 35 | 3-(2',4'-Difluor-pyrimidin-6-yl)-amino-6-sulfo-phenyl | 4- | -CH($CH_3$)-$CH_2$- | |
| 36 | 3-(2',4'-Difluor-pyrimidin-6-yl)-amino-6-sulfo-phenyl | 3- | -$CH_2$-$CH_2$-$CH_2$-$CH_2$- | |
| 37 | 3-(2',4'-Difluor-pyrimidin-6-yl)-amino-6-sulfo-phenyl | 4- | -$CH_2$-$CH_2$-$CH_2$-$CH_2$- | |
| 38 | 3-(2',4'-Difluor-5-chlor-pyrimidin-6-yl)-amino-6-sulfo-phenyl | 4- | -$CH_2$-$CH_2$- | |
| 39 | 3-(2',4'-Difluor-5-chlor-pyrimidin-6-yl)-amino-6-sulfo-phenyl | 3- | -$CH_2$-$CH_2$- | |
| 40 | 3-(2',4'-Difluor-5-chlor-pyrimidin-6-yl)-amino-6-sulfo-phenyl | 3- | -CH($CH_3$)-$CH_2$-$CH_2$- | |
| 41 | 3-(2',4'-Difluor-5-chlor-pyrimidin-6-yl)-amino-6-sulfo-phenyl | 4- | -CH($CH_3$)-$CH_2$-$CH_2$- | |
| 42 | 3-(2',4'-Difluor-5-chlor-pyrimidin-6-yl)-amino-6-sulfo-phenyl | 3- | -$CH_2$-$CH_2$-$CH_2$-$CH_2$- | |
| 43 | 3-(2',4'-Difluor-5-chlor-pyrimidin-6-yl)-amino-6-sulfo-phenyl | 4- | -$CH_2$-$CH_2$-$CH_2$-$CH_2$- | |
| 44 | 3-N-{2'-Fluor-4'-[N'-phenyl-N'-β-(β'-sulfatoethyl-sulfonyl)-ethyl]-amino-6'-yl}-amino-6-sulfo-phenyl | 3- | -$CH_2$-$CH_2$-$CH_2$- | |
| 45 | 3-N-{2'-Fluor-4'-[N'-phenyl-N'-β-(β'-sulfatoethyl-sulfonyl)-ethyl]-amino-6'-yl}-amino-6-sulfo-phenyl | 4- | -$CH_2$-$CH_2$-$CH_2$- | |
| 46 | 3-N-{2'-Fluor-4'-[N'-phenyl-N'-β-(β'-sulfatoethyl-sulfonyl)-ethyl]-amino-6'-yl}-amino-6-sulfo-phenyl | 3- | -CH($CH_3$)-$CH_2$-$CH_2$- | |
| 47 | 3-N-{2'-Fluor-4'-[N'-phenyl-N'-β-(β'-sulfatoethyl-sulfonyl)-ethyl]-amino-6'-yl}-amino-6-sulfo-phenyl | 4- | -CH($CH_3$)-$CH_2$-$CH_2$- | |

(fortgesetzt)

| Bsp. | Rest $X^1$-NH-$D^1$- | Stellung -$SO_3H$ | Rest G | Farbton |
|---|---|---|---|---|
| 48 | 3-N-{2'-Fluor-4'-[N'-phenyl-N'-β-(β'-sulfatoethyl-sulfonyl)-ethyl]-amino-6'-yl}-amino-6-sulfo-phenyl | 3- | $-CH_2-CH_2-CH_2-CH_2-$ | |
| 49 | 3-N-{2'-Fluor-4'-[N'-phenyl-N'-β-(β'-sulfatoethyl-sulfonyl)-ethyl]-amino-6'-yl}-amino-6-sulfo-phenyl | 4- | $-CH_2-CH_2-CH_2-CH_2-$ | |
| 50 | 4-(2',4'-Difluor-pyrimidin-6'-yl)-amino-2-sulfo-phenyl | 3- | $-CH_2-CH_2-$ | Rot |
| 51 | 3-N-{2'-Fluor-4'-[4"-(β-sulfatoethylsulfonyl)-phenylamino]-1 ', 3',5'-triazin-6'-yl]}-amino-2-sulfo-phenyl | 3- | $-CH(CH_3)-CH_2-$ | Rot |
| 52 | dito | 3- | $-CH(CH_3)-CH_2-CH_2-$ | Rot |
| 53 | 4-N-{2'-Fluor-4'-[3"-(β-sulfatoethylsulfonyl)-phenylamino]-1 ', 3',5'-triazin-6'-yl]}-amino-2-sulfo-phenyl | 3- | $-CH_2-CH_2-$ | Rot |
| 54 | 4-N-{2'-Fluor-4'-[4"-(β-sulfatoethylsulfonyl)-phenylamino]-1 ', 3',5'-triazin-6'-yl]}-amino-2-sulfo-phenyl | 3- | $-CH(CH_3)-CH_2-CH_2-$ | Rot |
| 55 | 4-N-{2'-Fluor-4'-[N'-phenyl-N'-β-(β'-sulfatoethyl-sulfonyl)-ethyl]-amino-6'-yl}-amino-2-sulfo-phenyl | 3- | $-CH_2-CH_2-$ | Rot |
| 56 | 4-N-{2'-Fluor-4'-[N'-phenyl-N'-β-(β'-sulfatoethyl-sulfonyl)-ethyl]-amino-6'-yl}-amino-2-sulfo-phenyl | 3- | $-CH_2-CH_2-CH_2-$ | Rot |
| 57 | 4-(2',4'-Difluor-pyrimidin-6'-yl)-amino-2-sulfo-phenyl | 3- | $-CH_2-CH_2-CH_2-$ | Rot |

Beispiel 58

62 g des Farbstoffes der folgenden Konstitution

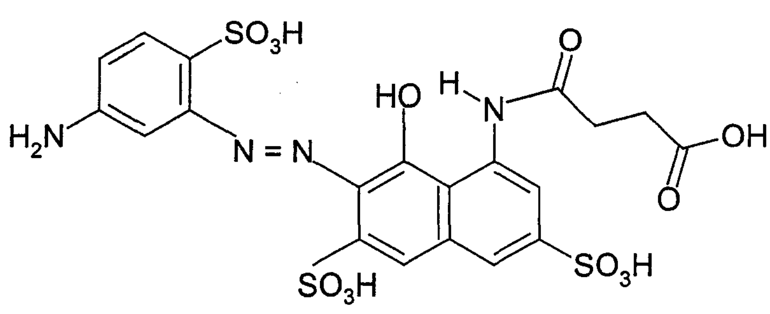

wurden bei pH 7 in 450 ml Eiswasser gelöst, 15 g Trifluortriazin zugegeben, danach der pH mit 15 %iger Sodalösung bei 6,5 bis 7 mit 0°C gehalten. Nach 20 Minuten wurden 25 g $H_3^+NCH_2CH_2OCH_2CH_2SO_2CH_2CH_2Cl\ Cl^-$ zugegeben, ein pH von 7,5 bis 8,5 mit Sodalösung eingestellt und bei einer Temperatur von 5 bis 15°C über 5 Stunden gehalten. Danach wurde mit Natronlauge der pH für eine Stunde auf 10,5 bis 11 erhöht und gehalten, auf 7,5 zurückgestellt, die Lösung gepuffert und der Farbstoff der folgenden Konstitution durch Aussalzen isoliert.

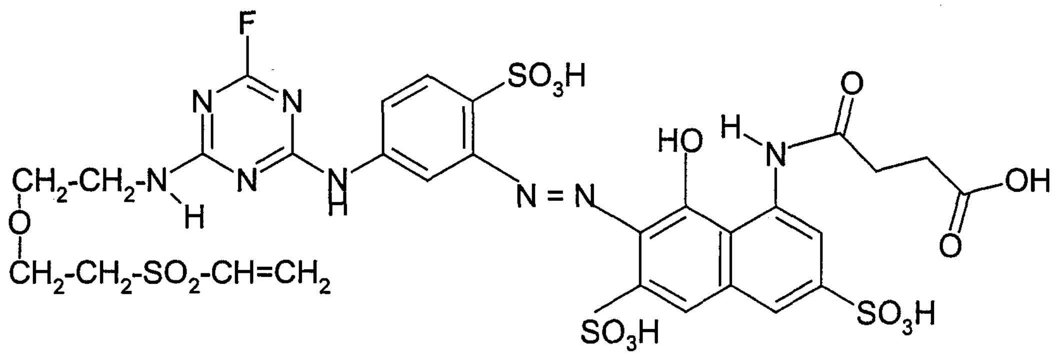

Beispiel 59

Man arbeitet analog Beispiel 58, verwendet aber 65 g des Farbstoffes

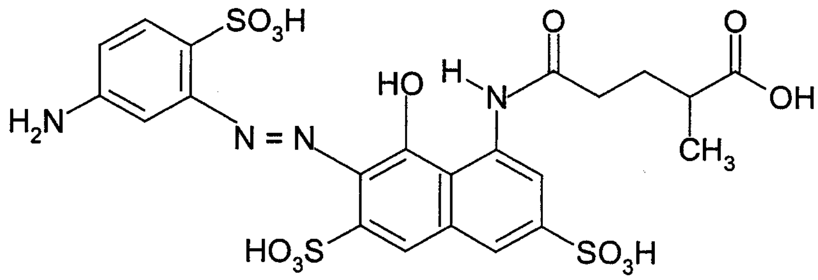

und 24 g des Amins $H^+N(CH_3)-CH_2-CH_2-SO_2-CH_2-CH_2-OSO_3^-$. Auf das Nachrühren bei pH 11 wird verzichtet. Man erhält folgenden Farbstoff

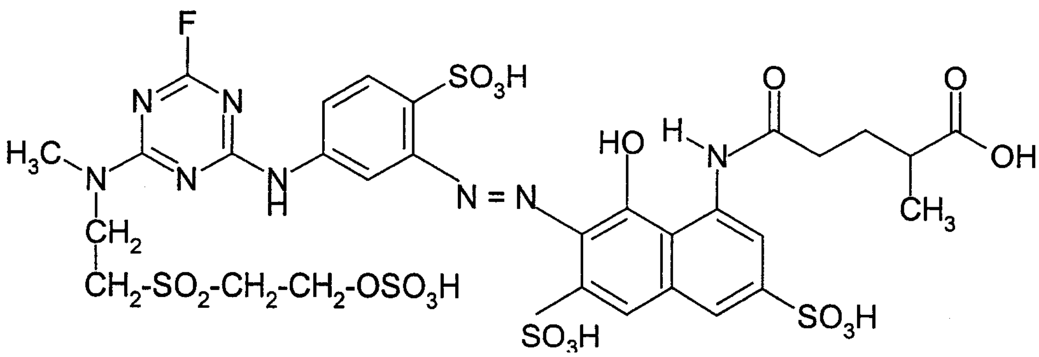

Analog Beispiel 58 wurden folgenden Farbstoffe hergestellt:

| Bsp. | Rest $X^1$-NH-$D^1$- | Stellung $-SO_3H$ | Rest G | Farbton |
|---|---|---|---|---|
| 60 | 3N-{2-Fluor-4'-[N'-methyl-N'-β-(β'-sulfatoethyl-sulfonyl)-ethyl]-amino-6'-yl}-amino-6-sulfo-phenyl | 3- | $-CH_2-CH_2-$ | Rot |
| 61 | 3N-{2-Fluor-4'-[N'-methyl-N'-β-(β'-sulfatoethyl-sulfonyl)-ethyl]-amino-6'-yl}-amino-6-sulfo-phenyl | 4- | $-CH_2-CH_2-$ | Rot |
| 62 | 3N-{2-Fluor-4'-[N'-methyl-N'-β-(β'-sulfatoethyl-sulfonyl)-ethyl]-amino-6'-yl}-amino-6-sulfo-phenyl | 4- | $-CH_2-CH_2-CH(CH_3)-$ | Rot |

(fortgesetzt)

| Bsp. | Rest $X^1$-NH-$D^1$- | Stellung -$SO_3H$ | Rest G | Farbton |
|---|---|---|---|---|
| 63 | 3N-{2-Fluor-4'-[N'-methyl-N'-β-(β'-sulfatoethyl-sulfonyl)-ethyl]-amino-6'-yl}-amino-6-sulfo-phenyl | 3- | $-(CH_2)_4-$ | Rot |
| 64 | 3N-{2-Fluor-4'-[N'-β-(β'-sulfatoethylsulfonyl)-ethyl]-amino-6'-yl}-amino-6-sulfo-phenyl | 3- | $-CH_2-CH_2-$ | Rot |
| 65 | 3N-{2-Fluor-4'-[N'-β-(β'-sulfatoethylsulfonyl)-propyl]-amino-6'-yl}-amino-6-sulfo-phenyl | 3- | $-CH_2-CH_2-$ | Rot |
| 66 | 3N-{2-Fluor-4'-[N'-β-(β'-sulfatoethylsulfonyl)-propyl]-amino-6'-yl}-amino-6-sulfo-phenyl | 4- | $-CH_2-CH(CH_3)-$ | Rot |

**Patentansprüche**

**1.** Monoazoverbindung der allgemeinen Formel (I)

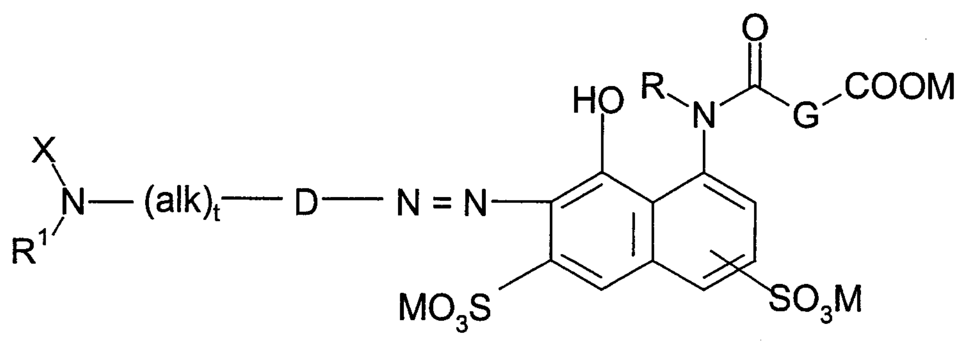

( 1 )

worin

- M für Wasserstoff, ein Alkalimetall oder ein anderes farbloses salzbildendes Metall steht;
- X eine faserreaktive Gruppe oder eine Gruppierung, die eine faserreaktive Gruppe enthält, bedeutet;
- $R^1$ für Wasserstoff, Alkyl mit 1 bis 4 C-Atomen oder Phenyl, das durch Sulfo, Methyl, Ethyl, Methoxy, Ethoxy oder Chlor substituiert sein kann, steht;
- alk Alkylen mit 1 bis 4 C-Atomen bedeutet;
- t die Zahl Null oder 1 ist;
- D für Phenylen, das durch 1 oder 2 Substituenten aus der Gruppe Sulfo, Carboxy, Alkyl mit 1 bis 4 C-Atomen, Alkoxy mit 1 bis 4 C-Atomen und Chlor substituiert sein kann, oder Naphthylen, das durch 1 oder 2 Sulfogruppen substituiert sein kann, steht;
- R Wasserstoff oder Alkyl mit 1 bis 4 C-Atomen bedeutet;
- G für Alkylen mit 2 bis 8 C-Atomen steht, das durch eine Heterogruppe unterbrochen sein kann und das durch einen oder mehrere Substituenten aus der Gruppe Halogen, Alkyl mit 1 bis 4 C-Atomen oder Phenyl substituiert sein kann, wobei die Alkylgruppen und die Phenylgruppe ihrerseits durch Hydoxy oder Alkoxy von 1 bis 4 C-Atomen substituiert sein können.

**2.** Monoazoverbindung nach Anspruch 1, dadurch gekennzeichnet, daß R Wasserstoff und $R^1$ Wasserstoff, Methyl oder Ethyl bedeuten.

**3.** Monoazoverbindung nach Anspruch 1 und/oder 2, dadurch gekennzeichnet, daß G für 1,2-Ethylen, 1,2-Propylen, 1,3-Propylen, 1,3-Butylen, 1,3-Pentylen, 2,3-Butylen, 2-Phenyl-1,3-propylen oder 2-Methyl-1,3-propylen steht.

**4.** Monoazoverbindung nach einem oder mehreren der Ansprüche 1 bis 3, dadurch gekennzeichnet, daß X für eine Gruppe der allgemeinen Formeln (3a), (3b), (3c), (3d), (3e), (3f), (3g) oder (3h)

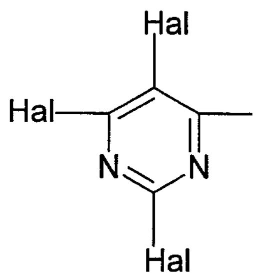

( 3a )

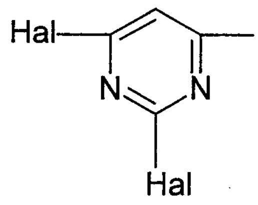

( 3b )

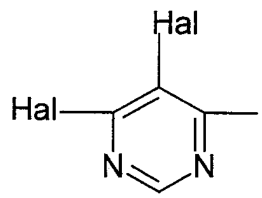

( 3c )

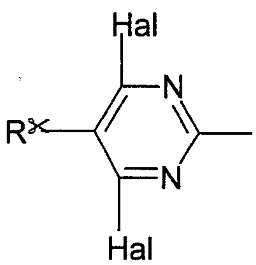

( 3d )

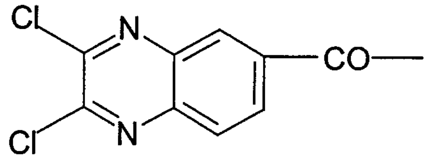

( 3e )

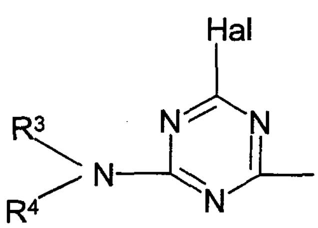

( 3f )

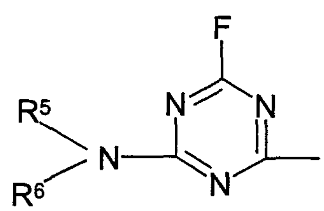

( 3g )

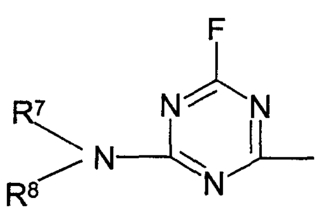

( 3h )

steht, in welchen

Hal jedes unabhängig voneinander Chlor, Brom oder Fluor bedeutet;
$R^\alpha$ Wasserstoff oder Hal bedeutet;
$R^3$ Wasserstoff oder Alkyl mit 1 bis 4 Kohlenstoffatomen, das durch Hydroxy, Alkanoyloxy mit 2 bis 5 Kohlenstoffatomen, Sulfato, Phosphato, Carboxy, Sulfo oder Alkoxy mit 1 bis 4 Kohlenstoffatomen substituiert sein kann, bedeutet;
$R^4$ Wasserstoff oder Alkyl mit 1 bis 4 Kohlenstoffatomen, das durch Hydroxy, Alkanoyloxy mit 2 bis 5 Kohlenstoffatomen, Sulfato, Phosphato, Carboxy, Sulfo oder Alkoxy mit 1 bis 4 Kohlenstoffatomen substituiert sein kann, bedeutet oder ein gegebenenfalls durch 1 oder 2 Methyl substituiertes Cyclohexyl mit 5 bis 8 Kohlenstoffatomen ist oder Phenyl, das durch 1 oder 2 Substituenten aus der Gruppe Sulfo, Carboxy, Chlor, Alkyl mit 1 bis 4 Kohlenstoffatomen und Alkoxy mit 1 bis 4 Kohlenstoffatomen, substituiert sein kann, ist oder Naphthyl ist, das durch Sulfo substituiert sein kann, oder
$R^3$ und $R^4$ zusammen ein Alkylen mit 5 bis 8 Kohlenstoffatomen oder ein durch -O- oder -NH- unterbrochenes Alkylen mit 4 bis 6 Kohlenstoff-atomen und zusammen mit dem N-Atom den Rest eines gesättigten Heterocyclus bilden;
$R^5$ Wasserstoff oder Alkyl von 1 bis 4 Kohlenstoffatomen oder Phenyl, das durch Chlor, Sulfo, Carboxy, Methyl, Ethyl, Methoxy oder Ethoxy substituiert sein kann, bedeutet;
$R^6$ für eine Gruppe der allgemeinen Formel (4a) oder (4b) steht

$$Y - SO_2 - ALK - \qquad (4a)$$

$$Y - SO_2 - AR - \qquad (4b)$$

in welchen

Y Vinyl oder Ethyl bedeutet, das durch einen alkalisch eliminierbaren Substituenten substituiert ist;
ALK Alkylen mit 1 bis 4 Kohlenstoffatomen bedeutet und
AR Phenylen bedeutet, das durch 1 oder 2 Substituenten aus der Reihe Sulfo, Carboxy, Alkoxy mit 1 bis 4 Kohlenszoffatomen, Alkyl mit 1 bis 4 Kohlenstoffatomen und Chlor substituiert sein kann, oder Naphthylen bedeutet, das durch 1 oder 2 Sulfogruppen substituiert sein kann;
$R^7$ Wasserstoff oder Alkyl mit 1 bis 4 Kohlentoffatomen steht;
$R^8$ eine Gruppe der allgemeinen Formel (4c) oder (4d) ist

$$Y - SO_2 - Alk - E - Alk - \qquad (4c)$$

$$Y - SO_2 - (Alk)_P - E - (Alk)_q - \qquad (4d)$$

in welchen

Y eine der obengenannten Bedeutungen hat,
Alk Alkylen mit 2 bis 4 Kohlenstoffatomem ist,
E eine Gruppe -O- oder -NH- ist,
p die Zahl Null oder 1 ist und
q die Zahl Null oder 1 ist, wobei die Summe (p + q) die Zahl 1 ist.

**5.** Monoazoverbindung nach einem oder mehreren der Ansprüche 1 bis 4, dadurch gekennzeichnet, daß X für 2,4-Difluor-5-chlor-pyrimidin-6-yl, 2,4-Difluor-pyrimidin-6-yl, 4,6-Difluor-5-chlor-pyrimidin-2-yl oder 4,6-Difluor-pyrimidin-4-yl steht, oder für Reste der allgemeinen Formel (3f), (3g) und (3h), in welchen $R^3$ Wasserstoff, Methyl, Ethyl, β-Hydroxyethyl oder β-Sulfoethyl bedeutet, $R^4$ Wasserstoff, Methyl, Ethyl, β-Hydroxyethyl, Cyclohexyl, Phenyl, 2-Sulfophenyl, 3-Sulfophenyl, 4-Sulfophenyl, 2-Carboxyphenyl, Naphth-1-yl, 1-Sulfo-naphth-2-yl oder 1,5-Disulfo-naphth-2-yl ist oder die Gruppe $R^3R^4N$- Morpholino bedeutet, $R^5$ Wasserstoff ist, $R^6$ 4-(β-Sulfatoethylsulfonyl)-phenyl, 3-(β-Sulfatoethyl-sulfonyl)-phenyl, 2-Methoxy-5-(β-sulfatoethylsulfonyl)-phenyl, 4-Vinylsulfonyl-phenyl, 3-Vinylsulfonyl-phenyl, 2-Methoxy-5-(β-sulfatoethyl-sulfonyl)-phenyl, 2,5-Dimethoxy-4-(β-sulfatoethylsulfonyl)-phenyl, 2-Methyl-4-(β-sulfatoethylsulfonyl)-phenyl, 2-Methoxy-5-methyl-4-(β-sulfatoethylsulfonyl)-phenyl, β-(β'-Sulfatoethylsulfonyl)-ethyl oder γ-(β'-Sulfatoethylsulfonyl)-propyl ist, $R^7$ Wasserstoff ist und $R^8$ β-[β'-(β''-Chlorethylsulfonyl)-ethoxy]-ethyl ist.

**6.** Monoazoverbindung nach einem oder mehreren der Ansprüche 1 bis 5, dadurch gekennzeichnet, daß in der allgemeinen Formel (1) die Gruppe X-$NR^1$-$(alk)_t$-D insbesondere für eine Gruppe der Formel (5a) oder (5b)

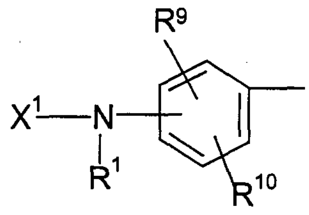

(5a)

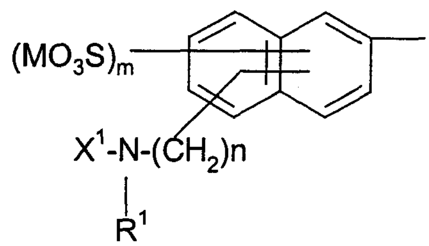

(5b)

steht, in welchen

| | |
|---|---|
| M und $R^1$ | wie in Anspruch 1 angegeben definiert sind; |
| $R^9$ | Wasserstoff, Sulfo, Alkyl mit 1 bis 4 Kohlenstoffatomen, Alkoxy mit 1 bis 4 Kohlenstoffatomen oder Halogen bedeutet; |
| $R^{10}$ | Wasserstoff, Sulfo, Alkyl mit 1 bis 4 Kohlenstoffatomen, oder Alkoxy mit 1 bis 4 Kohlenstoffatomen bedeutet; |
| $X^1$ | für eine Gruppe der allgemeinen Formel (3a), (3b), (3c), (3d), (3e), (3f), (3g) oder (3h) steht; |
| n | die Zahl 1, 2 oder 3 ist; und |
| m | die Zahl 1 oder 2 ist. |

**7.** Monoazoverbindung nach einem oder mehreren der Ansprüche 1 bis 6, dadurch gekennzeichnet, daß sie der allgemeinen Formel (1A)

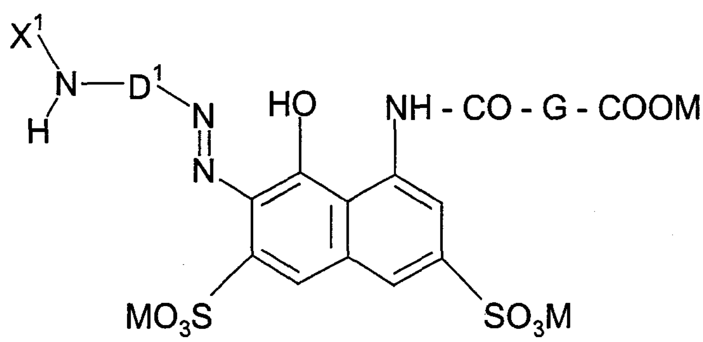

( 1A )

entspricht, in welcher M und G wie in Anspruch 1 angegeben definiert sind und $X^1$-NH-$D^1$- für einen Rest der allgemeinen Formel (5a) oder (5b) steht, in welchen $R^9$ Wasserstoff ist, $R^{10}$ Wasserstoff oder Sulfo ist, $X^1$ für einen Rest der allgemeinen Formel (3a), (3b), (3g) oder (3h) steht.

**8.** Verfahren zur Herstellung einer Monoazoverbindung gemäß einem oder mehreren der Ansprüche 1 bis 7, dadurch gekennzeichnet, daß eine Aminonaphtholsulfonsäure der allgemeinen Formel (9)

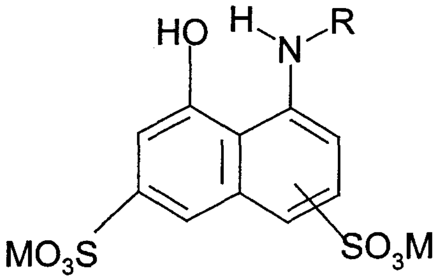

(9)

in welcher M und R wie in Anspruch 1 angegeben definiert sind, mit einem Anhydrid der allgemeinen Formel (10)

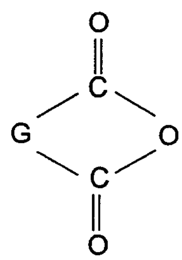

(10)

in welcher G wie in Anspruch 1 angegeben definiert ist, in wäßriger Suspension oder in einem organischen, für diese Umsetzung inerten Lösemittel oder in einem Gemisch solch eines Lösemittels mit Wasser umgesetzt und anschließend eine Kupplungsreaktion der so erhaltenen Verbindung der allgemeinen Formel (11)

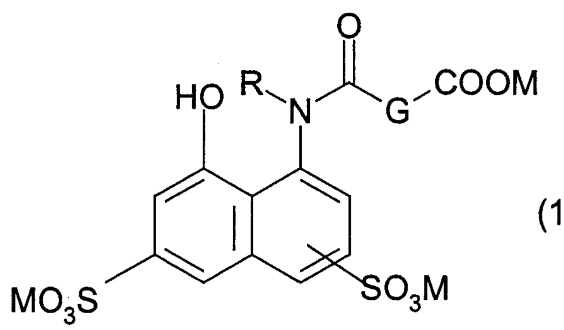

(11)

in welcher M, R und G wie in Anspruch angegeben definiert sind, mit einer auf üblichem Wege hergestellten Diazoniumsalzverbindung einer Aminoverbindung der allgemeinen Formel (12)

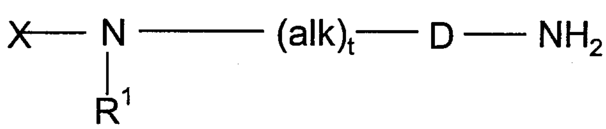

(12)

in welcher X, $R^1$, alk, D und t wie in Anspruch 1 angegeben definiert sind ausführt.

**9.** Verfahren zur Herstellung einer Monoazoverbindung gemäß einem oder mehreren der Ansprüche 1 bis 7, dadurch gekennzeichnet, daß man das Diazoniumsalz einer Verbindung der allgemeinen Formel (13)

$$H - N(R^1) - D - NH_2 \qquad (13)$$

in welcher D und $R^1$ wie in Anspruch 1 angegeben definiert sind, mit einer Verbindung der allgemeinen Formel (11) gemäß Anspruch 9 kuppelt und anschließend die erhaltene Azoverbindung der allgemeinen Formel (14)

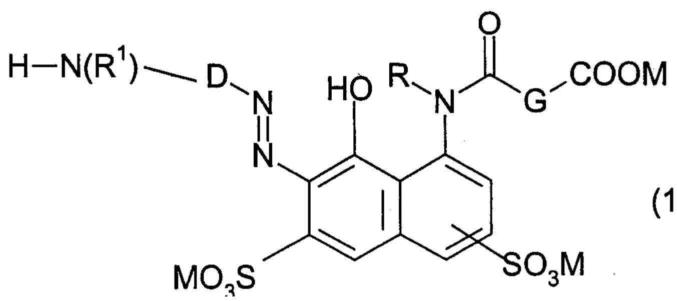

(14)

in welcher $R^1$, D, M, R und G wie in Anspruch 1 angegeben definiert sind, mit einer Verbindung der allgemeinen Formel Hal-X, in welcher Hal wie oben angegeben definiert ist und X für einen Rest der allgemeinen Formel (3a) bis (3h) gemäß Anspruch 4 steht, umsetzt, oder daß man im Falle der Synthese einer Monoazoverbindung der allgemeinen Formel (1), in welcher X für einen Rest der allgemeinen Formel (3f) bis (3h) gemäß Anspruch 4 steht, eine Verbindung der allgemeinen Formel (14) mit 2,4,6-Trihalogeno-1,3,5-triazin, wie 2,4,6-Trifluor-1,3,5-triazin (Cyanurfluorid) oder 2,4,6-Trichlor-1,3,5-triazin (Cyanurchlorid), umsetzt und die so erhaltene Dihalogeno-triazinylamino-Azoverbindung mit einem Amin der allgemeinen Formel $R^3R^4NH$ bzw. $R^5R^6NH$ bzw. $R^7R^8NH$ wobei $R^3$, $R^4$, $R^5$, $R^6$, $R^7$ und $R^8$ wie in Anspruch 4 angegeben definiert sind, umsetzt.

**10.** Verfahren zum F≅rben von hydroxy- und/oder carbonamidgruppenhaltigem Material, bei welchem man einen Farbstoff auf das Material aufbringt und den Farbstoff auf dem Material mittels W≅rme oder mit Hilfe eines alkalisch wirkenden Mittels oder mittels beider Ma8nahmen fixiert, dadurch gekennzeichnet, da8 man als Farbstoff einen Farbstoff von Anspruch 1 oder einen nach Anspruch 11 hergestellten Farbstoff einsetzt.